(19) Europäisches Patentamt
European Patent Office
Office européen des brevets

(11) EP 0 643 735 B1

(12) **EUROPEAN PATENT SPECIFICATION**

(45) Date of publication and mention of the grant of the patent:
**22.04.1998 Bulletin 1998/17**

(21) Application number: **93914364.0**

(22) Date of filing: **02.06.1993**

(51) Int Cl.[6]: **C08G 73/02**, H01B 1/12

(86) International application number:
**PCT/US93/05296**

(87) International publication number:
**WO 93/24555 (09.12.1993 Gazette 1993/29)**

(54) **SURFACE DOPANTS AS BLEND COMPATIBILIZERS IN CONJUGATED POLYMERS**

OBERFLÄCHEN-DOTIERUNGSMITTEL ALS BLENDHILFE IN CONJUGIERT-UNGESÄTTIGTEN POLYMEREN

DOPANTS DE SURFACE EN TANT QU'AGENTS DE COMPATIBILITE DE MELANGE DANS DES POLYMERES CONJUGUES

(84) Designated Contracting States:
**DE DK FR GB IT NL SE**

(30) Priority: **03.06.1992 US 893153**

(43) Date of publication of application:
**22.03.1995 Bulletin 1995/12**

(73) Proprietor: **MONSANTO COMPANY**
**St. Louis, Missouri 63167 (US)**

(72) Inventors:
- **SHACKLETTE, Lawrence, W.**
  **Maplewood, NJ 07040 (US)**
- **MILLER, Granville, G.**
  **Birmingham, AL 35205 (US)**
- **HAN, Chien-Chung**
  **Madison, NJ 07940 (US)**
- **ELSENBAUMER, Ronald, L.**
  **Arlington, TX 76019-0023 (US)**

(74) Representative: **Brock, Peter William et al**
**Urquhart-Dykes & Lord**
**1 Richfield Place**
**Richfield Avenue**
**Reading RG1 8EQ Berkshire (GB)**

(56) References cited:
**WO-A-90/10297**
**WO-A-92/18988**
**GB-A- 2 232 987**
**US-A- 4 983 322**
**US-A- 4 994 783**

EP 0 643 735 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention relates to novel electrically conductive conjugated polymers such as polyaniline. Another aspect of this invention relates to articles formed from conjugated polymers such as polyaniline articles, including films, inks, printing, parts, fibers, and coatings formed from the polymer compositions of this invention.

There has recently been an increased interest in the electrochemistry and electrical phenomena of polymeric systems. Recently, work has intensified with polymers having extended conjugation in at least one backbone chain such as a polyaniline. See for example , EP-A-0017717; US-A-3,963,498 4,025,463, 4,855,361 ,4,806,271 ,4,822,638 , 4,851,487, 4,798,685, 5,006,278, 5,069,820 and 5,061,401 ; and W089/01694 and WO90/10297.

WO90/10297 (corresponding to EP-B-0461182) discloses that thermally stable electrically conductive substituted or unsubstituted polyaniline particles can be obtained if polyanilines are doped with various organic acids and salts.

WO92/18988 (corresponding to European Application 92913745.3/0581898) is a document falling within the state of the art according to Article 54(3) EPC, and discloses an electrically conductive polyaniline particle comprising a substituted or unsubstituted polyaniline homopolymer or copolymer doped with two or more dopants, at least one of said dopants predominating at or near the surface of said particles and at least one other dopant predominating at or near the core of said particle.

The present invention provides an electrically conductive polymer particle comprising an ionized conjugated polymer doped with two or more dopants other than dinonylnaphthalene sulfonic acid, and wherein the dopants have one or more anionic moieties, and said particle having a layered skin-core structure with a skin region lying at or near the surface of the particle, and a core region at or near the core of the particle, with at least one first dopant predominating in the skin region, and at least one second dopant predominating in said core region, wherein said first dopant is derived from a dopant selected from organic species having one or more aliphatic moieties having at least three carbon atoms which are not substituted by an anionic moiety at more than one position, wherein the sum of said aliphatic moieties is such that, when said anionic moiety is substituted to an aromatic moiety, said derived dopant includes more than 12 aliphatic carbon atoms, and when said anionic moiety is substituted to an aliphatic moiety, the derived dopant includes more than 12 aliphatic carbon atoms.

The dopants according to the invention preferably have a molecular weight equal to or less than 2000, more preferably equal to or less than 1000 and most preferably equal or less than 500. As used herein, an "organic species" is a species which comprises hydrogen and carbon atoms and which may also contain other types of atoms such as halogen, oxygen, nitrogen, sulfur, selenium, phosphorus or boron. As used herein, "at or near the surface of the particle" is all or a portion of the surface of said particles generally to a depth of 5 nanometers (nm); and "at or near the core of said particle" is generally all or a portion of the particle more than 5 nanometers (nm) from the surface of the particle; "anionic moieties" are moieties having at least one negative charge; "aliphatic organic species" are organic species which include aliphatic groups such as alkyl, alkoxyalkyl, alkenyl, alkynyl, alkanoyl and alkylsulfonylalkyl, and "aliphatic/aromatic organic species" are organic species which include aromatic and aliphatic species such as alkylphenyl, phenyl, naphthyl, alkoxyphenyl and phenylalkyl.

The electrically conductive polymer particles according to the invention have a skin core structure and can be used to form a polymer blend comprising a matrix which comprises one or more thermosetting polymers, one or more thermoplastic polymers, or blends thereof having dispersed therein an electrically conductive effective amount of electrically conductive particles as defined above.

Several advantages flow from this invention. For example, through use of this invention, two or more dopants can be structured in the conjugated polymer particles to obtain better properties. For example, such surface dopant can be used to enhance the dispersion ability of doped conjugated polymer particles in a matrix polymer which is incompatible with the core dopant of said particles. This embodiment of the invention includes polyaniline particles doped predominantly in the skin or surface region of the particle with a dopant which has a more compatible surface energy with the intended matrix polymer or polymers of the blend but which may provide less electrical conductivity or less thermal stability and which is doped predominantly in the core region with a dopant which provides higher levels of electrical conductivity or thermal stability. This arrangement and combination of dopants provides particles and substrates comprising conductive polyaniline with the combinations of desirable features imparted by both dopants while minimizing or eliminating the undesirable features of each if taken individually.

Another advantage of this invention is the ease with which agglomerates or aggregates of conjugated polymer particles can be broken down during the dispersion process such as shear mixing, rolling, milling, extruding, or ultrasonification. Since doped conjugated polymer is highly charged and highly polar, particles tend to strongly aggregate due to coulombic or dipolar interactions. The use of surface dopants containing aliphatic carbon atoms reduces the charge density at the surface of said conjugated polymer particles and thereby renders aggregates easier to breakdown and disperse.

## BRIEF DESCRIPTION OF THE DRAWINGS

The invention will be more fully understood and further advantages will become apparent when reference is made to the following detailed description of the invention and the accompanying drawings in which Figure 1 is a percolation graph of conductivity versus volume fraction loading (in percent) of polyaniline particles in an insulating matrix polymer, poly(ethylene terephthalate glycol).

## DESCRIPTION OF THE PREFERRED EMBODIMENTS

This invention is directed to particles of an ionized, electrically conductive conjugated polymer (polymer cation) doped at or near the surface of the particle with one or more dopant solutes(anions). Particle size and shape are not critical. For example, the particles can be of an irregular shape or can be of a regular or substantially regular shape. The particles can be regular flat-shaped or needle-shaped particles having relatively high aspect ratios or can be short block, spherical, oval or like shaped particles having relatively low aspect ratios. In any event, the shape of the particles will be dictated solely by the needs of the specific application. Particle size may also vary widely and is dependent on the particular application. In those applications where relatively large particles are required, i.e., 51 to 100 µm, large particles are used. Conversely in those applications where relatively small particles are required i.e. less than one µm, small particles are used. Although not critical, preferred particles size is from 0.02 to 50 µm and more preferred particles sizes are from 0.02 to 3µm. It is most preferred that the primary particles themselves be doped in a skin/core configuration and that the primary particles range in size from 0.05 to 0.2 µm.

In some conjugated polymer compositions, particles may exist as aggregates composed of smaller primary particles. It is generally most preferred for the production of uniform blends of high conductivity that these aggregates be broken down to their primary particles during compounding.

Conjugated polymers for use in the process of this invention may vary widely. As used herein "conjugated polymers" are homopolymers or copolymers which are comprised of alternating carbon-carbon double bonds (either singly or as part of an aromatic ring structure), and optionally heteroatoms such as oxygen, nitrogen, sulfur, selenium, phosphorus along the polymer conjugated backbone or conjugated side chains thereof, and can be rendered to an electrically conductive state (equal to or greater than $10^{-9}$S/cm as determined by the four-in-line probe method described in "Laboratory Notes on Electrical and Galvanometric Measurements" by H.H. Wieder, Elsevier Scientific Publishing Co., New York, New York, 1979) by doping with some dopants known in the art.

Illustrative of such polymers are poly(unsaturated) polymers such as substituted and unsubstituted polyacetylene; substituted or unsubstituted poly(heteroaromatics), such as poly(thienylenes), poly(pyrroles), poly(quinolines), poly (isothianaphthenes), poly(carbazoles), poly(alkyl thiophenes); substituted or unsubstituted poly(aromatics) such as poly(phenylene sulfides), poly(anilines), poly(phenylenes), poly(naphthalenes), poly(naphthols), and poly(perinaphthalenes); poly (benzoquinones); poly(azulenes); and substituted or unsubstituted poly(aromatic vinylenes) such as poly(phenylene vinylenes), poly(dimethoxyphenylene vinylenes), poly(naphthalene vinylenes); and substituted or unsubstituted poly(heteroaromatic vinylenes) such as poly(thienylene vinylenes), poly(furylene vinylenes), poly(carbazole vinylenes), poly(pyrrole vinylenes).

Preferred conjugated homopolymers or copolymers are "conjugated backbone homopolymers or copolymers". As used herein, "conjugated backbone homopolymers or copolymers" are conjugated homopolymers or copolymers in which all or substantially all of the conjugation is in the main backbone of the homopolymer or copolymer.

Preferred conjugated homopolymer or copolymers are substituted or unsubstituted polyanilines, poly(heterocycles), and aromatic or heteroaromatic vinylenes. Illustrative of preferred homopolymers or copolymers of poly(heterocycles), and aromatic or heteroaromatic vinylenes are those described in more detail in U.S. Patent Nos. 4,711,742 and 5,068,060 and PCT/W088/00954. More preferred for the practice of this invention are conjugated polymers which have relatively low acidity (pKa > 2, preferably > 4 and most preferably > 6) and which are readily doped by protonic acids as for example, polyaniline, poly(benzoquinone), polypyrrole, and poly(carbazole).

More preferred conjugated backbone homopolymers or copolymers are poly(anilines) and poly pyrroles. Most preferred polymers are polyanilines. As used herein, "poly(anilines)" are homopolymers or copolymers in which the recurring backbone monomeric units are selected from the group consisting of substituted or unsubstituted phenyl rings and amine linkages (-NH- or -NR- where R is a substituent other than hydrogen) which may contain varying amounts of substituted or unsubstituted quinoid rings and imine (-N =) linkages. As used herein, "neutral or undoped polyaniline" is characterized by an uncharged backbone, "polyaniline base" is a particular form of undoped polyaniline which contains at least one quinoid diimine linkage in the backbone and "electrically conductive or doped poly(aniline)" is characterized by a charged backbone which may be formed by a partial or complete protonation of the amine and/or imine nitrogen atoms. As used herein, "leuco polyaniline" is a neutral form of polyaniline which is in a reduced state (low oxidation state) and which comprises to a substantial degree phenyl rings linked by amine (-NH-) linkages. Such leuco-polyanilines are preferably doped with oxidizing dopants such as ferric salts.

Any form of such poly(anilines) can be conveniently used in the practice of this invention. Illustrative of useful forms are those described in Green, A.G. and Woodhead, A.E., CXVII-Aniline-black and Allied Compounds, Part II", J. Chem. Soc., 101 pp. 1117 (1912) and Kobayashi, et al., "Electrochemical Reactions... of Polyaniline Film-Coated Electrodes", J. Electroanal. Chem., 177, pp. 281-91 (1984) and in Shacklette, L.W., et al. "Structure and Properties of Polyaniline as Modeled by Single-Crystal Oligomers", J. Chem. Phys. 88 P 3955 (1988).

**FORMULA I**

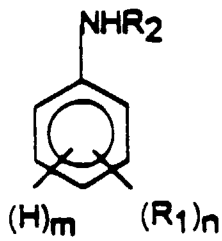

Preferred polyaniline consists of repeat units of the Formulas II and/or III:

**Formula II**

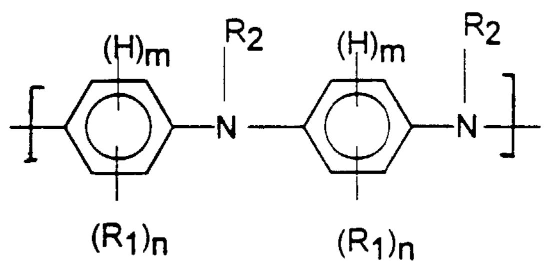

Formula III

**Formula III**

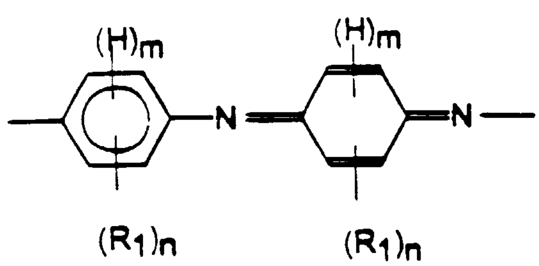

a combination thereof having various ratios of the above repeat units in the polyaniline backbone such as leucoemeraldine, protoemeraldine, emeraldine, nigraniline and pernigraniline wherein:

n is an integer from 0 to 4;
m is an integer from 0 to 4, with the proviso that the sum of n and m is equal to 4 and with the further proviso that at least one position on the aniline ring of Formula I, preferably at the para position, is substituted with a substituent which will allow coupling of the aniline units, such as halo, hydrogen or other leaving group;
$R_1$ is the same or different at each occurrence and is selected from the group consisting of alkyl, deuterium, alkenyl, alkoxy, cycloalkyl, cycloalkenyl, alkanoyl, alkylthio, alkynyl, aryloxy, alkylthioalkyl, alkylaryl, arylalkyl, amino, alkylamino, dialkylamino, arylamino, diarylamino, alkylarylamino, aryl, alkylsulfinyl, aryloxyalkyl, alkylsulfinylalkyl, alkoxyalkyl, alkylsulfonyl, arylthio, alkylsulfonylalkyl, boric acid or salts or esters thereof, phosphoric acid or salts or esters thereof, arylsulfinyl, alkoxycarbonyl, arylsulfonyl, carboxylic acid or salts or esters thereof, phosphonic acid or salts or esters thereof, halo, hydroxy, cyano, sulfinic acid or salts or esters thereof, phosphinic acid or salts or esters thereof, sulfonic acid or salts or esters thereof, nitro, alkylsilane, or any of the foregoing aryl, aliphatic or cycloaliphatic groups substituted with one or more phosphonic acid or salts or esters thereof, sulfonic acid or salts or esters thereof, phosphoric acid or salts or esters thereof, boric acid or salts or esters thereof, sulfinic acid or salts or esters thereof, phosphinic acid or salts or esters thereof, carboxylic acid or salts or esters thereof, halo, nitro, amino, alkylamino, dialkylamino, arylamino, diarylamino, alkylarylamino, cyano or epoxy moieties; or any two $R_1$ groups together or any $R_1$ group together with any $R_2$ group may form a substituted or unsubstituted alkylene, alkenylene or alkynylene chain completing a 3, 4, 5, 6, 7, 8, 9 or 10 membered aromatic, heteroaromatic, heteroalicyclic or alicyclic ring, which ring may optionally include one or more divalent nitrogen, sulfur, sulfinyl, or salts or esters thereof, carbonyl, sulfonyl, or oxygen atoms wherein permissible substituents are one or more phosphonic acid or salts or esters thereof, sulfonic acid or salts or esters thereof, phosphoric acid or salts or esters thereof, boric acid or salts or esters thereof, phosphinic acid or salts or esters thereof, carboxylic acid or salts or esters thereof, halo, nitro, hydroxy, amino, alkylamino, sulfinic acid or salts or esters thereof, dialkylamino, arylamino, diarylamino, alkylarylamino, cyano or epoxy moieties ; or $R_1$ is an aliphatic moiety having repeat units of the formula:

$$-(OCH_2CH_2)_qO\text{-}CH_3,\ -(OCH_2CH(CH_3))_qO\text{-}CH_3,$$

$$-(CH_2)_qCF_3,\ -(CF_2)_q\text{-}CF_3 \text{ or } -(CH_2)_qCH_3$$

wherein
q is a positive whole number; and
$R_2$ is selected from the group consisting of permissible $R_1$ substituents and hydrogen. Poly(anilines) useful in the practice of this invention are more preferably those of the Formula IV:

**FORMULA IV**

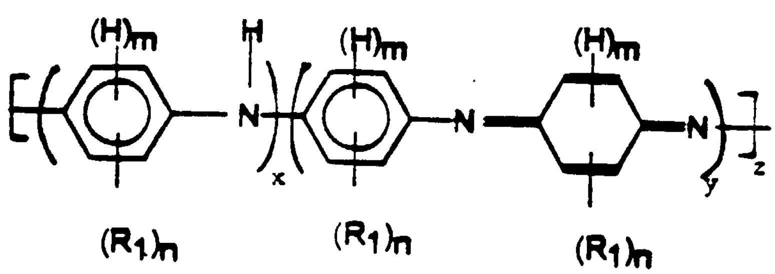

wherein:

n, m, $R_1$ and $R_2$ are as described above;
x and y are the same or different at each occurrence and are integers equal to or greater than 0, with the proviso that the sum of x and y is greater than 0, preferably where x is an integer equal to or greater than 0

and/or that the ratio of x to y is greater than or equal to 0, more preferably said ratio is equal to or greater than 0.5 and most preferably said ratio is equal to or greater than 1 ; and
z is the same or different at each occurrence and is an integer equal to or greater than 5.

Preferred for use in the practice of this invention are poly(anilines) of the above Formula IV in which:

n is an integer from 0 or 1;
m is an integer from 3 or 4, with the proviso that the sum of n and m is equal to 4;
$R_1$ is phenyl, or alkyl or alkoxy having from 1 to 12 carbon atoms, a protonic acid function or a salt or ester thereof, or alkyl, phenyl or alkoxy substituted with one or more of protonic acids or salts or esters thereof;
x is an integer equal to or greater than 1;
y is equal to or greater than 0,
with the proviso that the ratio of x to y is equal to or greater than 0.5;
z is an integer equal to or greater than 5;

Particularly preferred for use in the practice of this invention are poly(anilines) of the above Formula IV in which:

n is an integer from 0 or 1;
m is an integer from 3 or 4 with the proviso that the sum of n and m is equal to 4;
$R_1$ is alkyl, or alkoxy having from 1 to 6 carbon carboxylic acid or salts or esters thereof, phosphinic acid or salts or esters thereof, sulfonic acid or salts or esters thereof, sulfinic acid or salts or esters thereof, phosphonic acid or salts or esters thereof, or alkyl or alkoxy substituted with phosphinic acid or salts or esters thereof, sulfinic acid or salts or esters thereof, halo, phosphonic acid or salts or esters thereof, phosphoric acid or salts or esters thereof, or sulfonic acid or salts or esters thereof;
x is an integer equal to or greater than 2; and
y is equal to or greater than 0, with the proviso that the ratio of x to y is greater than 1; and
z is an integer equal to or greater than 10.

Amongst the preferred embodiments, more preferred for use in the practice of this invention are poly(anilines) of the above Formula IV in which:

n is an integer from 0 or 1;
m is an integer from 3 or 4, with the proviso that the sum of n and m is equal to 4;
$R_1$ is alkoxy or alkyl of from 1 to 6 carbon atoms (preferably from 1 to 3 carbon atoms), sulfonic acid or salts thereof, phosphoric acid or salts thereof, or phosphonic acid or salts thereof;
x is an integer equal to or greater than 2; and
y is an integer equal to or greater than 1; and
z is an integer equal to or greater than 10.

In the most preferred embodiment of the invention;

n is 0;
m is 4;
x is an integer equal to about 2;
y is an integer equal to 1, with the proviso that the ratio of x to y is equal to or greater than 2; and
z is an integer equal to or greater than 10.

In general, the number of conjugated homopolymer or copolymer repeat units are not critical and may vary widely. The greater the number of repeat units the greater the molecular weight of the conjugated homopolymer or copolymer and the greater the viscosity of solutions of the polymer. In the present application where conjugated homopolymers or copolymers of relatively high molecular weight and insolubility are required, then such materials can be used. The number of repeat units (z) is preferably at least 10. The upper limit can vary widely depending on the desired molecular weight and viscosity and the required degree of processibility, such as melt processibility and solution processibility. In the preferred embodiments of the invention, the number of repeat units is at least 20, and in the particularly preferred embodiments, the number of repeat units is at least 30. Amongst the particularly preferred embodiments, most preferred are those embodiments in which the number of repeat units is at least 40.

Conjugated homopolymers and copolymers can be conveniently prepared through conventional procedures. Such procedures are well known in the art and will not be described herein in great detail. See for example U.S. Patent Nos.

4,940,640; 4,711,742; 4,521,589; 4,808,681; 4,983,322; 5,006,278 and 4,900,782; PCT W088/00954; and "The Handbook of Conducting Polymers", edited by Terje A. Skotheim, Marcell Decker, Inc., New York and Basel and references cited therein. For example, preferred polyanilines can be prepared through use of chemical and electrochemical synthetic procedures. For example, one form of polyaniline can be prepared by treating aniline with ammonium persulfate $(NH_4)_2S_2O_8$ in excess 1M HCl. This powdered form of polyaniline is blue green in color. After methanol washing and air drying this material exhibits a conductivity of about 5 S/cm. This conductive form of polyaniline can be treated with ammonium hydroxide in ethanol to form a non-conductive form of polyaniline which is dark blue in color and which has a conductivity of less than 10-8 S/cm. Other chemical procedures for preparation of various chemical forms of polyaniline are described in detail in Green et al and U.S. Patent Nos. 4,855,361, 4,798,685, 4,806,271, 4,822,638, 4,851,487 and 4,940,517 described above.

Useful forms of conjugated polymers can also be prepared electrochemically. For example, useful forms of polyaniline can be prepared by the electrochemical oxidation of aniline in aqueous fluoroboric acid electrolyte on a platinum foil anode.

Other useful conjugated polymers can be prepared pyrolytically. For example, polyacene can be prepared by the pyrolysis of phenolic resins as described in greater detail in U.S. Patent Nos. 4,615,960; 4,628,015; 4,601,849; and 4,753,717.

Other chemical and electrochemical syntheses and transformations of the conductive form of polyaniline may be discovered and are presently contemplated as being useful. Moreover, additional forms or types of polyaniline may be elucidated in the future. Accordingly, no limitation to the syntheses, transformation, or structures herein described or postulated is intended beyond the limitations of the appended claims.

The conjugated homopolymer or copolymer is doped with a suitable dopant solute to render the polymer electrically conductive. In general, such dopant solute is derived from a dopant compound, which upon addition to the conjugated polymer, introduces positive charge carriers onto the polymer backbone with concomitant formation of an anionic dopant solute species (dopant anion) to form a charge transfer complex with the polyaniline, which complex has an electrical conductivity equal to or greater than $10^{-8}$ohm$^{-1}$ cm$^{-1}$ by the four-in-line probe method.

Any doping procedure may be used. Such methods are conventional and will not be described herein in any great detail. For example, the conjugated homopolymer or copolymer is best doped by contacting the dopant with the polymer for a time sufficient to dope to the desired extent. The polymer can be contacted with the dopant in the gaseous state, in the liquid state, neat, or diluted by some suitable dilutent such as a gas as for example air, or liquid such as water, or an organic liquid. The dopant can be contacted with the conjugated homopolymer or copolymer either during polymerization or after polymerization. In a preferred embodiment of the invention, the conjugated homopolymer or copolymer may be doped by carrying out the polymerization in the presence of an acid having a pKa in the solution equal to or less than that of the homopolymer or copolymer, or by subsequently treating the synthesized polymer with said acid. In general, the higher the pKa of the conjugated homopolymer or copolymer, the higher the acid pKa that can be used to provide a conductive polymer; and conversely, the lower the pKa of the conjugated polymer, the lower the pKa of the acid necessary to provide a desired degree of electrical conductivity. The pKa (or pH) of the acid is preferably equal to or less than 5, more preferably equal to or less than 4, and the most preferably equal to or less than 3.

In another preferred embodiment of the invention, the conjugated copolymer or homopolymer can be doped after polymerization. For example, the conjugated homopolymer or copolymer is doped by contact with a solution of the dopant in a suitable solvent such as water.

Dopants for use in the practice of this invention may vary widely depending on a number of factors. For example, the particular dopant of choice will depend on the particular form of the undoped conjugated polymer. For example, if the polymer is initially in a reduced state (e.g. reduced polypyrrole or leuco-polyaniline) then the dopant of choice would be an oxidizing dopant or combination of dopants. Alternatively, if the polymer is a base, as for example polyaniline base, then the preferred dopant would be an acid.

The dopant will also depend on whether the dopant solute is at or near the surface of the particle. At least one of these dopants is an aliphatic or aliphatic/aromatic organic species which on doping the particle forms a dopant solute having one or more anionic functionalities and having one or more aliphatic moieties having at least three carbon atoms which are not substituted with an anionic functionality at more than one position, wherein the sum of such aliphatic moieties is such that the dopant solute includes more than twelve aliphatic carbon atoms when the solute includes an aromatic moiety which is substituted with an anionic functionality, and includes more than 12 aliphatic carbon atoms when the solute includes no aromatic moieties substituted with an anionic functionality. This is the first dopant, i.e. the one that predominates in the Skin region of the particle. Aliphatic moieties may vary widely and include those consisting only of carbon and hydrogen, such cycloalkyl, cycloalkenyl, alkyl, alkylene, alkynylene, alkynyl, alkenyl and alkenylene groups and polymeric moieties such as polyolefins. Useful aliphatic moieties also include those which include one or more heteroatoms or functional groups such as -O-, $-S(O)_2-$, -S-, $-S_2-$, -C(O)-, -NH-, -N(H)C(O)-, -OC(O), -C(O)NH- and -N = N- as for example, alkoxy, alkanoyl, alkylamino, dialkylamino, alkylcarbonylalkylene, aminoalkyl, alkylthio, alkylsulfinyl, alkylcarbonylalkyl, poly(alkylene oxide), alkoxyalkyl, alkylthioalkyl, alkylsulfinylalkyl, alkylsulfonylalkyl, alkanoyloxyalkyl, alkylcarbonylalkyl, alkoxycarbonylalkyl, alkylaminocarbonylalkyl, alkanoylaminoalkyl and polymeric moieties such as polyesters, polyamides, polyethers, polycarbonates.

The molecular weight of the organic species is not critical and may very widely. The molecular weight of the species is preferably equal to or less than 2000, more preferably equal to or less than 1000 and most preferably equal to or less than 500.

Useful dopants for use in doping the particle at or near its surface may vary widely, the only requirement is that the dopant includes the critical number of aliphatic carbon atoms. Such useful dopants include oxidizing dopants. Illustrative of useful oxidizing dopants are $NO_2$+ and Fe(III) salts such as those of the formula: $NO_2R_7SO_3$, $NO_2R_7CO_2$, $NO_2R_7SO_2$, $Fe(R_7SO_2)_3$, $Fe(R_7SO_3)_3$ and $Fe(R_7CO_2)_3$ (which give rise to doped polymers having dopant solutes of the formula $R_7SO_2$-, $R_7SO_3$- and $R_7CO_2$-) wherein $R_7$ is an organic radical having the required number of aliphatic carbon atoms. In the preferred embodiments of the invention the dopant used to dope the particle at or near its surface is an organic protonic acid where the anionic functionalities of the dopant solute are derived from the acid groups. The acid functionality of the dopant may vary widely. The only requirement is that the acid is capable of partially or completely protonating the conjugated polymer to form a charge-transfer complex of the positively charged protonated polymer and the acid. For example, in the case of polyaniline, the acid should be capable of protonating the nitrogen of the amine linkage, imine linkage or a combination thereof. This can usually be accomplished when the pKa of the acid function is less than that of the conjugated polymer in the doping medium. In the case of polyaniline, acids having a pKa of less than 5 are preferably used. Such acid functionalities include but are not limited to sulfur or phosphorus acid functionalities such as sulfonic acid functionalities, sulfinic acid functionalities, sulfuric acid functionalities, phosphonic acid functionalities, phosphinic acid functionalities. Preferred acid functionalities are sulfur acid functions, more preferred acid functionalities are sulfinic and sulfonic acid functionalities, and most preferred acid functionalities are sulfonic acid functionalities.

Preferred for use in the practice of this invention for doping the particle at or near the surface of the particles are dopant solutes of the formulas:

$$R_4(PO_3 =)_r(PO_2 =)_r(SO_2\text{-})_r(PO_2(R_6)^-)_r(SO_3)^-)_r(CO_2\text{-})_r(PO(R_6)^-)(BO_2=)_r$$

$$(PO_3\text{-}M)_r(PO_2\text{-}M)_r(BO_2\text{-}M)_r$$

and having a cationic moiety or moieties of the Formula:

$$M^{+s}$$

wherein at least one of the cationic moieties of the formula $M^{+s}$ is a proton or is a moiety which can be transformed into a proton under use conditions;

$M^{+s}$ is a cationic species having a positive charge s;
s is an integer equal to or greater than 1, preferably from 1 to 8;
$R_4$ is an organic radical, with the proviso that the total number of aliphatic carbon atoms included in $R_4$ is greater than twelve when $R_4$ is a moiety in which the anionic moiety is directly bonded to the aromatic group and is greater than 12 when $R_4$ is a moiety in which the anionic moiety is bonded directly to an aliphatic moiety and there are no anionic moieties bonded to an aromatic moiety, and with the further proviso that $R_4$ includes at least one aliphatic moiety of at least three carbon atoms having an anionic moiety bonded to no more than one position; and
r is an integer equal to or greater than 1, preferably from 1 to 8; and
$R_6$ is hydrogen, alkyl, aryl, alkylaryl, aryloxy, arylalkoxy, alkylsulfinyl, alkylthio, alkylsulfonyl or alkoxy.

More preferred for use in the practice of this invention as dopant solutes at or near the surface of the particle are those derived from acid dopants of the formula: $R_4(PO_2(R_6)M)_g(PO_3M_2)_f(SO_3M)_c(CO_2M)_d(PO_2M_2)_t(SO_2\ M)_h$

$$(PO(R_6)M)_i$$

or

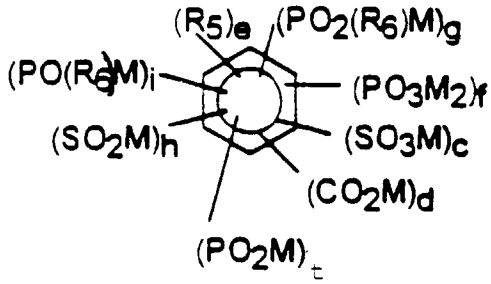

wherein:

M is $H^+$, or other metal or non-metal cation with the proviso that at least one of M is $H^+$ or a moiety which can be thermally or chemically transformed into a proton under use conditions, such as $NH_4+$, $N(CH_3)_2H_2+$, $PhS^+$, $N(C_2H_5)H_3+$ ;
t is 0, 1, 2, 3 or 4;
h is 0, 1, 2, 3 or 4;
i is 0, 1, 2, 3 or 4;
c is 0, 1, 2, 3 or 4;
d is 0, 1, 2, 3 or 4;
f is 0, 1, 2, 3 or 4;
g is 0, 1, 2, 3 or 4, with the proviso that at least one of c, d, f, g, h, i or t is other than 0;
e is 0, 1 or 2; and
$R_4$ is alkyl or alkyl substituted with one or more aryl, alkylthio, alkoxycarbonyl, alkylcarbonyl, alkylcarbonylalkyl, alkylsulfinylalkyl, alkylsulfonylalkyl, alkylaminoalkyl, alkylamino, dialkylamino, alkylarylamino, (alkyl)arylamino, di(alkyl)arylamino, alkylaryl, alkylthioalkyl, alkoxy, alkoxyalkyl, alkylsulfinyl, alkylsulfonyl, dialkylaminoalkyl, aryloxyalkyl, aryloxyalkoxy, alkoxyaryl, alkylaryloxy or alkoxyaryloxy with the proviso that the total number of aliphatic carbon atoms included in $R_4$ is more than 12 carbon atoms and with the further proviso that $R_4$ includes at least one aliphatic moiety which includes at least four aliphatic carbons having an anionic moiety bonded to no more than one position;
$R_5$ is the same or different at each occurrence and is substituted or unsubstituted alkyl, alkoxycarbonyl, alkylcarbonyl, alkylcarbonylalkyl, alkylsulfinylalkyl, alkylsulfonylalkyl, alkylaminoalkyl, alkylamino, dialkylamino, alkylarylamino, (alkyl)arylamino, di(alkyl)arylamino, alkylaryl, alkylthioalkyl, alkoxy, alkoxyalkyl, alkylsulfinyl, alkylthio, alkylsulfonyl, dialkylaminoalkyl, aryloxyalkyl, aryloxyalkoxy, alkcxyaryl, alkylaryloxy or alkoxyaryloxy wherein permissible substituents include sulfonic acid or a salt or ester thereof, sulfinic acid or a salt or ester thereof, phosphonic acid or a salt or ester thereof, phosphinic acid or a salt or ester thereof, phosphoric acid or a salt or ester thereof, carboxylic acid or a salt or ester thereof, boric acid or a salt or ester thereof, perhaloalkyl, phenyl, alkoxy, aryloxy, halo, cyano, amino, haloalkyl, hydroxy, nitro, or any two or more $R_5$ substituents together may form an alkylene or alkenylene chain completing a ring system such as a fused or spiro ring system which may include one or more cyclic rings, which chain may be unsubstituted or substituted with one or more halo, hydroxy, nitro, cyano, amino, alkylamino, dialkylamino, arylamino, diarylamino, alkylarylamino, or $R_4$ or $R_5$ is a moiety of the formula:

$$-(OCH_2CH_2)_qOCH_3 \text{ or } -(OCH_2CH(CH_3))_qOCH_3$$

wherein:

q is a positive whole number from 6 to 12 or alkyl substituted with said moiety; with the proviso that the total number of aliphatic carbon atoms included in $R_5$ is greater than fourteen and with the further proviso that includes at least one aliphatic moiety of at least four carbon atoms; and
$R_6$ is hydrogen, alkyl, aryl, alkylaryl, aryloxy, arylalkoxy, alkylsulfinyl, alkylthio, alkylsulfonyl, or alkoxy.

In the particularly preferred embodiments of this invention, useful dopant solutes for doping the particle at or near its surface are derived from acid dopants of the above formula:

$$R_4(PO_2(R_6)M)_g(PO_3M_2)_f(SO_3M)_c(PO_2M_2)_t(SO_2M)_h(PO(R_6)M)_i$$

or

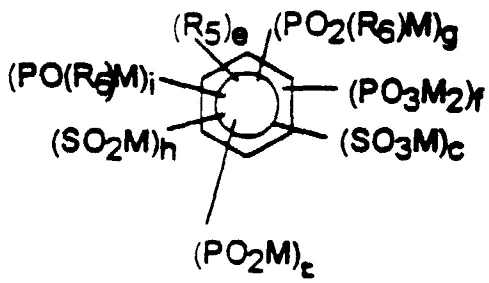

wherein:

c, t, f, g, h and i are the same or different at each occurrence and are 0, 1, 2, or 3, with the proviso that at least one of c, t, f or g, i or h is other than 0;

e is 1 or 2;

$R_4$ is substituted or unsubstituted alkyl wherein permissible substituents are selected from the group consisting of alkyl, alkoxy, halo, phenyl, alkoxyphenyl, alkylphenyl, phenoxy, sulfophenoxy, haloalkyl, perhaloalkyl, alkoxyphenyl, alkylphenyl, alkylthio or alkylthioalkyl with the proviso that the total number of aliphatic carbon atoms included in $R_4$ is more than 12 carbon atoms and with the further proviso that $R_4$ includes at least one aliphatic moiety which includes at least five aliphatic carbons having an anionic moiety bonded to no more than one position;

$R_5$ is the same or different at each occurrence and is substituted or unsubstituted alkylphenyl, alkoxyphenyl or alkyl wherein permissible substituents are selected from the group consisting of alkyl, alkoxy, halo, phenyl, alkoxyphenyl, alkylphenyl, phenoxy, sulfophenoxy, haloalkyl, perhaloalkyl, alkoxyphenyl, alkylphenyl, alkylthio or alkylthioalkyl or any two $R_5$ substituents together may form an unsubstituted or substituted alkylene or alkenylene chain completing an aromatic or an alicyclic ring system wherein permissible substituents are as described above $R_5$ is a moiety of the formula:

$$-(OCH_2CH_2)_qOCH_3 \text{ or } -(OCH_2CH(CH_3))_q\ OCH_3$$

wherein:

q is a positive whole number from 6 to 12, with the proviso that the total number of aliphatic carbon atoms included in $R_5$ is greater than thirteen and with the further proviso that $R_5$ includes at least one aliphatic moiety of at least five carbon atoms;

$R_6$ is hydrogen, alkyl, alkoxy or substituted or unsubstituted phenoxy, phenyl or phenylalkyl wherein permissible substituents are alkyl, alkoxy or a combination thereof; and

M is $H^+$, or other metal or non-metal cation, with the proviso that at least one of M is $H^+$ or a moiety which can be thermally or chemically transformed into a proton under use or process conditions.

In the most preferred embodiments of this invention, useful dopant solutes for doping the particles at or near its surface are those derived from acid dopants of the formula:

$$R_4(PO_2M)_t(SO_3M)_c(PO_3)_f$$

or

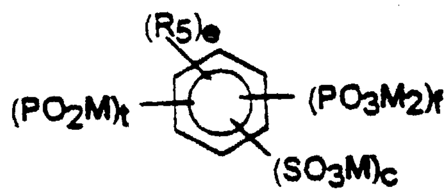

wherein:

c, f and t are the same or different and are 0, 1 or 2, with the proviso that at least one of c, f and t is not 0;
e is 1 or 2;
$R_4$ is alkyl or phenylalkyl, either unsubstituted or substituted with one or more phenoxy, sulfophenoxy or alkoxy substituents wherein the aliphatic moieties include at least seven carbon atoms;
$R_5$ is the same or different at each occurrence and is alkyl, alkoxy, alkoxyalkyl, or phenylalkyl, either unsubstituted or substituted with one or more phenoxy, sulfophenoxy or alkoxy substituents or any two or more $R_5$ substituents together may form an alkylene or alkenylene chain completing an aliphatic or aromatic ring system which may be substituted with one or more alkyl, alkoxy, fluoro, phosphinic acid, phosphonic acid, phenylalkyl, alkylphenyl, alkoxyphenyl , (alkyl)(alkoxy) phenyl, fluoroalkyl, sulfonic acid, carboxylic acid, hydroxy, nitro, amino ,cyano ,or substituted or unsubstituted phenyl or phenylalkyl wherein permissible substituents are alkyl, alkoxy or a combination thereof; with the proviso that the total number of aliphatic carbon atoms included in $R_5$ is greater than fourteen and with the further proviso that $R_5$ includes at least one aliphatic moiety of at least seven carbon atoms; and
M is $H^+$ or other metal or non-metal cation, with the proviso that at least one of M is $H^+$ or is a moiety which can be thermally transformed into a proton under use or process conditions.

In the especially preferred embodiments of this invention, useful dopant solutes for doping the particles at or near its surface are those derived from acid dopants of the formula:

$$R_4(SO_3M)_c$$

or

or

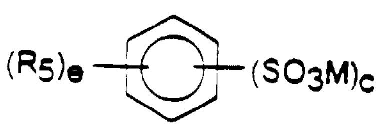

wherein:

c is 1, 2 or 3;
e is 1 or 2;
$R_4$ is alkyl having more than 12 carbon atoms (preferably up to twenty or thirty carbon atoms) or said alkyl substituted with one or more halo substituents, preferably fluoro;
$R_5$ is alkyl, alkoxy, alkoxyalkyl, phenylalkyl, phenyl, phenoxy or sulfophenoxy substituted with one or more alkyl, alkoxy or a combination thereof or any two $R_5$ substituents together may form an alkylene or alkenylene chain completing an aromatic or alicyclic ring system which may be substituted with one or more alkyl, amino, hydroxy, fluoro, alkoxy, or alkoxyalkyl; with the proviso that the total number of aliphatic carbon atoms included in $R_5$ is greater than fourteen and with the further proviso that $R_5$ includes at least one aliphatic moiety of at least seven carbon atoms; and

M is $H^+$ or other metal or non-metal cation or a moiety which can be thermally transformed into a proton under process conditions.

Most preferably $R_5$ is alkyl or phenoxy substituted with one are more alkyl or sulfonic acid groups or any two $R_5$ groups together form an alkenylene chain completing a naphthalene ring substituted with one or more alkyl groups.

In the process of the embodiment of this invention of choice, the dopant solutes for doping the particle at or near its surface are derived from sulfonic acid dopants of the formula:

$$R_4(SO_3M)_c$$

or

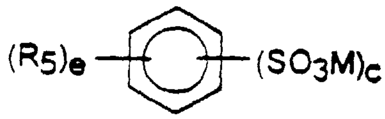

wherein;

$R_4$ is substituted or unsubstituted alkyl wherein permissible substituents are one or more fluoro groups, with the proviso that $R_4$ contains more than 12 aliphatic carbon atoms, preferably 12 up to thirty carbon atoms, more preferably 12 up to twenty-five carbon atoms and most preferably 12 up to twenty carbon atoms ;
e is 1 or 2;
c is 1 or 2;
$R_5$ is the same or different at each occurrence and is alkyl, either unsubstituted or substituted with one or more fluoro or sulfonic acid groups, or any two $R_5$ substituents together may form a divalent alkenylene chain completing a naphthalene ring, which ring substituted with one or two substituted or unsubstituted alkyl groups wherein permissible substituents as one or more fluoro or sulfonic acid groups with the proviso that $R_5$ includes more than 12 aliphatic carbon atoms; and
M is a proton, or other metal or non-metal cation, with the proviso that at least one of M is proton.

For example, in the preferred embodiments of this invention, the surface dopant solute is derived from an alkane sulfonic acid wherein the number of aliphatic carbon atoms is from 16 to 30 (such as Aristal-L, Aristol-M, and Aristol-H available from Pilot Chemical Co.); or is a naphthalene sulfonic acid substituted by one more alkyl wherein the total number of carbons is from 16 to 30 such as dinonylnaphthalene sulfonic acid with the proviso that $R_5$ includes more than 12 aliphatic carbon atoms; or is a disulfonated diphenyl ether substituted by one or more alkyl wherein the total number of carbon atoms is from 16 to 30 (such as the acid derivative of Dowfax™ 8390 available from Dow Chemical Co.) with the proviso that $R_5$ includes more than 12 aliphatic carbon atoms. Most preferably, the surface dopant solute is dinonylnaphthalenesulfonic acid, didecyldiphenyl ether disulfonic acid, hexadecyldiphenyl ether disulfonic acid, or an alkanesulfonic acid containing more than 12 aliphatic carbon atoms.

The entire particle has a skin core dopant structure where the dopant solute at or near the surface of the particle is different from the dopant solute at or near the core of said particle.

Dopants for use in the practice of this invention at or near the core of the particle can vary widely and can be such materials which are known in the art for use in doping conjugated backbone polymers to form conductive or semi-conductive polymers, as for example, those described in detail in U.S. Patent Nos. 4,442,187 and 4,321,114, and PCTWO89/01694 and PCT\N090/10297. Illustrative of useful dopants for forming the dopant solute at the core of the particle are those useful for forming the dopant solute at or near the surface of the particle. Illustrative of other useful dopant solutes for use at or near the core of the particle are those derived from oxidizing dopants. Oxidizing dopants are well known in the conductive polymer art, and any of such known oxidizing dopants can be used. Illustrative of useful oxidizing dopants are $AsF_5$, $MoOCl_4$, $MoCl_5$, $PCl_5$, $POCl_3$, $PCl_3$, $AlCl_3$, $NO^+$ and $NO_2$+ salts (such as $NOBF_4$, $NOPF_6$, $NOSbF_6$, $NOAsF_6$, $NOCH_3CO_2$, $NO_2BF_4$, $NO_2PF_6$, $NO_2AsF_6$, $NO_2SbF_6$, and $NO_2CF_3SO_3$), $HClO_4$, $HNO_3$, $H_2SO_4$, benzoylperoxide, $SO_3$, $Br_2$, $(FSO_3)_2$, $CuCl_2$, $FSO_3H$, and Fe(III) salts (such as $Fe(BF_4)_3$, $FeBr_3$, $Fe(CH_3SO_3)_3$, $Fe(ClO_4)_3$, $FeCl_3$, $Fe(OTs)_3$ wherein $OTs^-$ is tosylate ($CH_3(C_6H_4)SO_3$-), and $Fe(CF_3SO_3)_3$ which give rise to doped polymers containing dopant solutes such as $NO_3$-, $CH_3SO_3$-, $AlCl_4$-,$BF_4$-, $CuCl_3$-, $PCl_4$-, $PF_6$-, $AsF_6$-, $SbF_6$-, $CF_3SO_3$-,

$ClO_4$-, OTs-, $SO_3$-2, $C_6H_5CO_2$-, $CH_3SO_3$-, $FSO_3$-, and $FeCl_4$-. Other useful oxidizing dopants include oxidizing salts such as $LiClO_4$, AgOTs, $NaClO_3$, $Bu_4NClO_4$ (where Bu is Butyl). Still other useful dopants include non-oxidizing salts such as $Bu_4NOTs$, $Bu_4NCF_3SO_3$, $LiCF_3SO_3$, $NaC_6H_4(SO_3)_2$, in combination with an oxidant such as ammonium persulfate, $H_2O_2$, halogen, oxygen, TCNQ, TCNE, DDQ,. Preferred oxidizing dopants for use in the practice of this invention are oxidizing dopants selected from the group consisting of Cu(II), Fe (III), $NO^+$, or $NO_2$ + salts of organic sulfonates or phosphonates such as $Fe(CH_3SO_3)_3$ or NOOTs or and particularly preferred oxidizing dopants for use in the practice of this invention are Fe(III) salts of organic sulfonates or phosphonates. Amongst these particularly preferred embodiments, most preferred oxidizing dopants are Fe(III) salts of organic sulfonates.

Useful dopant solutes for use at or near the core of the particle may also be derived from protonic acid dopants. Illustrative of such protonic acid dopants are inorganic oxidizing or non-oxidizing protonic acid dopants. Such dopants include inorganic acid such as hydrofluoric acid, fluorosulfonic acid, hydrochloric acid, hydroiodic acid, phosphoric acid, nitric acid, perchloric acid, fluoroboric acid, boric acid, sulfuric acid. Illustrative of still other useful protonic acid dopants are organic non-oxidizing protonic acids such as those forming dopant solutes of the formula:

$$R_4(PO_3=)_r(PO_2(R_6)^-)_r(BO_2=)_r(SO_3-)_r(CO_2-)_r(PO_2=)_r(PO(R_6)^-)_r(SO_2-)_r$$

and having one or more cationic moieties selected from the group consisting of:

$$M^{+s}$$

wherein:

$R_4$ and $R_6$ are the same or different at each occurrence and are organic radical or amino;
M is a species having a positive charge equal to s, provided that at least one of $M^{+s}$ is a proton or a moiety which can be transformed by radiation, heat and chemicals into a proton under use conditions such as $NH_4$+, $N(CH_3)_2H_2$+, $N(C_2H_5)H_3$+, and $Ph_3S^+$;
s is the same or different at each occurrence and is an integer equal to 1 to 8;
r is the same or different at each occurrence and is 0 or a positive integer equal to or greater than 1, with the proviso that at least one of r is other than 0.

The $R_4$ and $R_6$ group may vary widely and can be a substituted or unsubstituted aliphatic, cycloaliphatic or heterocycloaliphatic radical such as alkyl, nitroalkyl, haloalkyl, or a substituted or unsubstituted aromatic radical such as phenyl, halophenyl, nitrophenyl, anthracyl, naphthyl, phenanthryl. $R_4$ and $R_6$ groups may also be a polymeric radical such as a polymer having recurring pendant phenyl groups in the polymeric backbone substituted with sulfonic acid, sulfinic acid, phosphonic acid, phosphinic acid, phosphoric acid, carboxylic acid, boric acid, or the salts or esters thereof; moieties such as sulfonated or phosphonated polystyrene, poly(2-methylstyrene), poly(4-phenylstyrene), poly(2-vinyl naphthalene), poly(vinyl benzoate), poly(benzyl methacrylate). In the particularly preferred embodiments of the invention, $R_4$ and $R_6$ are aromatic radical and in the most preferred embodiments $R_4$ and $R_6$ are substituted or unsubstituted phenyl or naphthyl. Illustrative of still other useful non-oxidizing protonic acid dopants are those forming dopant solutes of the formula:

$$R_4(PO_3=)_r(PO_2(R_6)^-)_r(BO_2=)_r(SO_3-)_r(CO_2-)_r(PO_2=)_r(PO(R_6)^-)_r(SO_2-)_r$$

and having one or more cationic moieties selected from the group consisting of:

$$M^{+s}$$

wherein:

$R_4$ and $R_6$ are the same or different at each occurrence and are organic or inorganic radical or amino;
$M^{+s}$ is a species having a positive charge equal to s, provided that at least one of $M^{+s}$ is a proton or a moiety which can be transformed by radiation, heat and chemicals, into a proton under use conditions such as $NH_4$+, N $(CH_3)_2H_2$+, $N(C_2H_5)H_3$ + , and $Ph_3S^+$;
s is the same or different at each occurrence and is an integer equal to 1 to 8;

r is the same or different at each occurrence and is 0 or a positive integer equal to or greater than 1, with the proviso that at least one of r is other than 0.

The $R_4$ and $R_6$ group may vary widely and can be a substituted or unsubstituted aliphatic radical such as alkyl, nitroalkyl, haloalkyl, or a substituted or unsubstituted aromatic radical such as phenyl, halophenyl, nitrophenyl, anthracyl, naphthyl, alkylphenyl, phenanthryl. $R_4$ and $R_6$ groups may also be a polymeric radical such as a polymer having recurring pendant phenyl groups in the polymeric backbone substituted with sulfonic acid and derivatives thereof such as salts, phosphoric acid and derivatives thereof such as salts, phosphonic acid and derivatives thereof such as salts, sulfinic acid and derivatives thereof such as salts, carboxylic acid and derivatives thereof such as salts, boric acid and derivatives thereof such as salts, or phosphonic acid and derivatives thereof such as salts; polymers such as sulfonated or phosphonated polystyrene, poly(2-methylstyrene), poly(4-phenylstyrene), poly(2-vinyl naphthalene), poly(vinyl benzoate), and poly(benzyl methacrylate). In the particularly preferred embodiments of the invention, $R_4$ and $R_6$ are aromatic radical and in the most preferred embodiments $R_4$ and $R_6$ are substituted or unsubstituted phenyl or naphthyl. Such acids include 1-anthracene sulfonic acid, oxalic acid, 9-anthracene sulfonic acid, tartaric acid, 2-phenanthrene sulfonic acid, malonic acid, 3-phenanthrene sulfonic acid, succinic acid, 9-phenanthrene sulfonic acid, glutaric acid, adipic acid, trifluoromethane sulfonic acid, pimelic acid, perflourooctyl sulfonic acid, azelaic acid, perfluorooctyl carboxylic acid, sebacic acid, octyl sulfonic acid, phthalic acid, dodecyl sulfonic acid, isophthalic, cetyl sulfonic acid, terephthalic, toluene sulfonic acid, methyl phosphinic acid, dimethyl phosphinic acid, phenyl phosphonic acid, dodecylbenzene sulfonic acid, naphthalene sulfonic acid, benzene disulfonic acid, benzene sulfonic acid, 1,3-benzene disulfonic acid, 2,5-dihydroxy-1,4-benzene disulfonic acid, camphor sulfinic acid, naphthalene trisulfonic acid, ethylbenzene sulfonic acid, ethane sulfonic acid 1,5-naphthalene disulfonic acid, nickel phthalocyanine tetrasulfonic acid, diphenyl phosphinic acid, phenyl phosphinic acid, ortho boric acid, 3-sulfopropyl acrylate, meta boric acid, 3-sulfopropyl methacrylate, sulfamic acid, 5-sulfosalicyclic acid, trion (4,5-dihydroxy-1, 3-benzene disulfonic acid), vinyl sulfonic acid, arsenic acid, arsenous acid, arsinic acid, arsonic acid, sulfanilic acid, 4-sulfophthalic acid, sulfoacetic acid, methyl phosphonic acid, poly(2-vinyl naphthalene), naphthol yellow, naphthol blue black, 1,2-naphthoquinone-4-sulfonic acid, naphthylazoxine S, 1-octane sulfonic acid. The nature of the $M^{+n}$ group may vary widely. For example, $M^{+n}$ may be a non-metal cation such as $Bu_4N^+$, $H^+$, $NO^+$, $NO_2+$, $NH_4+$, $N(CH_3)_2H_2+$, $N(C_2H_5)H_3+$, or may be a metal cation such as $Na^+$ , $Li^+$, $K^+$, $Ag^+$, $Ba^{+2}$, $Co^{+3}$, $Al^{+3}$, $Fe^{+3}$.

Dopants which are most preferred for use at or near the core of the conductive polyaniline particles of this invention when the purpose is to achieve high conductivity include but are not limited to methane sulfonic acid, propane sulfonic acid, trifluoromethane sulfonic acid, p-toluene sulfonic acid, 4-hydroxybenzene sulfonic acid, benzene sulfonic acid, sulfuric acid and trifluoroacetic acid.

The amount of dopant added to the polyaniline at or near the surface of the particle or at or near the core of the particle is not critical and may vary widely. In general, sufficient dopant is added to the polyaniline such that the conductivity is at least $10^{-8}$ $ohm^{-1}cm^{-1}$. The upper level of conductivity is not critical and will usually depend on the type of aniline polymer employed and the dopant. In general, the highest level of conductivity that can be obtained is provided without unduly adversely affecting the environmental stability of the polyaniline. In the preferred embodiments of the invention, the amount of dopant employed is sufficient to provide a conductivity of at least $10^{-6}ohm^{-1}$ $cm^{-1}$ and in the particularly preferred embodiments is sufficient to provide a conductivity of from $10^{-4}ohm^{-1}cm^{-1}$ to $10^{+3}ohm^{-1}cm^{-1}$. Amongst these particularly preferred embodiments, most preferred are those embodiments in which sufficient dopant is employed to provide a conductivity of at least $10^{-3}ohm^{-1}$ $cm^{-1}$ to $10^{+3}ohm^{-1}cm^{-1}$, with amounts sufficient to provide a conductivity from $10^{0}ohm^{-1}cm^{-1}$ to $10^{+3}ohm^{-1}cm^{-1}$ usually being the amounts of choice.

This degree of structure provides for an increase in the effectiveness of the particles under use conditions. For example, particles of electrically conductive polymers having relatively high conductivity and dispersibility are sought for dispersion in thermoplastics, such as polyesters as for example poly(ethylene terephthalate), poly(butylene terephthalate) and poly(ethylene terephthalate glycol); polyamides such as nylon 6, nylon 66, and the like; polyolefins such as poly(ethylene) and poly(propylene); polycarbonates; and poly(phenylene oxides). When such blends are used, for example, to provide electromagnetic interference (EMI) shielding, a blend conductivity greater than 0.1 S/cm is usually required and a blend conductivity of greater than 1.0 S/cm is preferred. Uniform distribution of particles is sought to prevent gaps in the shield. Surfaces and corners in molded articles typically present difficulties for achieving sufficiently uniform distribution of particles. The present invention provides means for achieving the desired properties of the blend by providing conductive particles which by virtue of their multilayer structure preferably combine the requirements for relatively high compatibility and conductivity.

The polyaniline particles containing the dopants of this invention are also expected to show an increased effectiveness for their dispersibility in common organic liquids, such as, for example, alcohols, ketones, alkanes, sulfoxides, sulfides, and amides.

Similarly, the present invention provides a means of providing dispersible particles of a desirable size, geometry, and surface area. Such particles are generally produced by a nucleation and growth process within the reaction mixture.

The size, shape, and surface area of such particles is known by those of skill in the art to be a function of reaction conditions especially including the chemical composition of the dopant which is typically present during the synthesis of the polyaniline. The present invention allows for the optimal choice of dopant for this purpose since the other required characteristics, such as compatibility with the matrix polymer or liquid medium can be added or enhanced in a post synthesis step via a controlled exchange of dopant(s) in the surface regions of the particles.

The particles may include various other optional ingredients. For example, salts containing dopant anions, plasticizers, or dispersion aids.

The particles of this invention can be manufactured using modification of conventional chemical or electrochemical doping procedures such as those of U.S Patent 4,820,595 relating to polyaniline. For example, particles of polyaniline can be prepared by addition of an oxidant to solutions of the aniline monomer. The dopant anion incorporated in the polyaniline may be derived from the oxidant (e.g. $FeCl_4$- from $FeCl_3$) or it may be derived from an acid or salt which is also present in the solution (e.g., $CH_3(C_6H_4)SO_3$- when tosylic acid is present) during addition of an oxidant such as ammonium persulfate. Such conventional procedures produce doped conductive polyaniline particles and particle aggregates which are, in general, homogeneously doped with a dopant or mixture of dopants. In the present invention, such dopants or mixtures of dopants form the core of the conductive polyanilines particles. When a structured dopant distribution is desired, the outer layer or layers of the particles of this invention which contain dopant produced either during synthesis or after synthesis is totally or partially replaced by the dopant of this invention by dopant exchange or by partial dopant removal and replacement. It is possible to achieve a stratified dopant configuration by using an excess of a different salt or acid during the latter stages of the polymerization reaction or during the washing procedure after polymerization. Alternatively, the particles may be filtered and washed with water or other solvent after the synthesis to remove any free salt or acid of the first core dopant type or depending on the degree of washing to remove a surface layer of the core dopant from each particle. A dopant layer of different composition can be then be achieved by washing or slurrying the polymer particles in a solution of the new dopant. Repeatedly washing with different dopants will produce multiple layers. It is preferred that primary particles rather than aggregates receive a core/shell dopant structure. It is preferred that the aqueous or nonaqueous solvent or solvent mixture employed in the procedure act to swell the polyaniline particles. It is also preferred that the entire procedure from synthesis through to the formation of a layered dopant structure be carried out while keeping the polyaniline particles wetted by a liquid which swells the polyaniline.

When highly dispersible polyaniline particles are desired and there are no requirements for a different core dopant, then the dopants of this invention containing long-chain aliphatic moieties with more than 12 carbon atoms when bonded to aromatic moieties and more than 12 when bonded to aliphatic moieties can be employed both during the synthesis and the washing procedure to produce a particle with a single dopant. In other instances, two dopants may be employed together as a mixture during the synthesis and washing procedure provided that at least one of said dopants contains more than 12 aliphatic carbon atoms when bonded to aromatic moieties and more than 12 aliphatic carbon atoms when bonded to aliphatic moieties. Depending on the choice of said dopants a uniform mixture of dopants may be obtained within the particle or one of the dopants may predominate on the surface of said particle. It is preferred that the dopant containing more than 12 aliphatic carbons predominate on the surface of the particles in order to best promote dispersibility in the matrix.

The electrically conductive polyaniline composition of this invention can be used for any purpose for which conductive polymers are useful. For example, the composition can be used to form electrically conductive articles for shielding purposes, anti-static purposes or adhesives. Examples of articles include conductive polymer housings for EMI shielding of sensitive electronic equipment such as microprocessors, infrared, radio frequency and microwave absorbing shields, flexible electrically conducting connectors, conductive bearings, brushes and semiconducting photoconductor junctions, electrodes, capacitors, optically transparent or non-transparent corrosion-preventing coatings for corrodible materials such as steel, antistatic materials and optically transparent or non-transparent conductive coatings for packaging electronic components, antistatic carpet fibers, waxes for floors in computer rooms, antistatic finishes for CRT screens, aircraft, auto windows and electrostatic dissipative packaging for electronics.

The particles of this invention are particularly suited for use in the manufacture of emulsions and suspensions of the polyaniline, and blends of the polyaniline with other polymers as for example, other conjugated backbone polymers, thermoplastic polymers such as polyamides, polycarbonates, polyesters, polylactones, polyolefins, polyacrylics, polyimides, poly(esterimides), poly(estercarbonates), poly(etherimides), thermosetting resins such as phenolics and phenolic derivatives, alkyds, unsaturated polyester, epoxies, melamines, amino resins and allylics; and mixtures thereof. For example, blends of conductive polyaniline particles which are inherently highly polar may be made with a polymer such as poly(ethylene terephthalate glycol) (PETG) or polycarbonate (PC) by combining a core dopant such as tosylate ($CH_3(C_6H_4)SO_3$-), which offers high conductivity with a surface dopant such as dinonyl(naphthalene sulfonic acid), didodecyldiphenylether disulfonic acid, or didecyldiphenylether disulfonic acid which offers increased compatibility with PETG or PC via the long-chain alkyl substituent on the dopant anion.

The following specific examples are presented to more particularly illustrate the invention, and should not be construed as being limitations on the scope and spirit of the invention.

EXAMPLE 1

Polyaniline tosylate (PAni-OTs) was prepared from aniline, p-toluene sulfonic acid (PTSA), and ammonium persulfate solution by first combining the aniline and the acid, and then slowly adding the ammonium persulfate solution to the acid and aniline solution in approximately one hour. The solids which were formed were then filtered and washed successively twice with water (75°C), once with 5% solution of PTSA (slurry for 1 to 2 hrs), and finally with a 2% solution of PTSA in methanol. After filtration, the solids were dried in a vacuum oven at 130°C until the temperature of the powdered solids reached 110°C. The water content of the solids was determined to be less than 3% by weight.

EXAMPLES 2 to 5 and COMPARISON EXAMPLES 1 and 2

Polyaniline tosylate was prepared as in Example 1. This polyaniline was slurried in a wash containing from 2 to 4 percent by weight of a compatibilizing dopant, and then filtered and dried in a fluid-bed drier. The compatibilization doping agents employed were decyldiphenylether disulfonic acid (Dowfax™3BO), linear $C_{10}$-substituted diphenyl ether disulfonic acid (CF10LA) (CALFAX 10LA-40 obtained from Pilot Chemical Co.) and long-chain alkane sulfonic acids (Aristol-M (molecular weight 450) and Aristol-H (molecular weight 500)) obtained from Pilot Chemical Co. Corporation.

This polyaniline was blended in poly(ethylene terephthalate glycol), PETG, at 190°C in a Brabender™ mixer beginning at a concentration of 40 percent by weight. This mixture was successively diluted to lower concentrations of polyaniline by withdrawing samples of the blend and replacing the withdrawn sample by an equivalent weight of PETG. The samples of the polyaniline/PETG blend were then compression molded (Hot-pressed) to form thin sheets. The conductivity of the sheets was then measured by means of a four probe apparatus consisting of a square array of probes spaced 1-cm apart.

The conductivity as a function of the concentration of polyaniline in volume percent determines a percolation curve for the blend. The critical concentration for percolation (i.e., the formation of continuous three dimensional pathways for electronic conduction) is theoretically associated with the point of steepest rise in a plot of the logarithm of conductivity vs the percentage of loading volume of the conductive filler. An example of such curves is shown in Figure 1 which compares the results for polyaniline tosylate (PAni OTs) with those for two compatibilized compositions having a core/skin dopant arrangement on polyaniline particles, PAni OTs/DBS and PAni OTs/AS-H. Since the inflexion point is difficult to determine directly from the plot, we have used the fact that for a random distribution of particles the conductivity above the percolation point is expected to follow a relation of the form, $\sigma = \sigma_o(\delta-\delta_c)^\tau$, where $\sigma$ is conductivity, $\delta$ is the fractional loading of the conductive component in the insulating matrix, $\delta_c$ is the critical loading for percolation, i.e., the percolation point and $\sigma_0$ and $\tau$ are constants. The parameters, $\delta_c$ $\sigma_0$ and $\tau$ are determined by a numerical fit to the data. The results of such a fit is shown for three separate cases in Figure 1 as the smooth curves. The data obtained for various samples with different compatibilizers is summarized in Table 1. Also listed are the data for saturation conductivity ($\sigma_{sat}$) and for the conductivity at an intermediate loading level (18.5 volume percent, $\sigma_{18.5}$.

Table 1-

| Polyaniline compositions with Compatibilizing Skin Dopants | | | | |
|---|---|---|---|---|
| Ex No. | Composition | $\delta_c$x100% (vol%) | σsat* S/cm) | σ18.5 (S/cm) |
| Comp. Ex. 1 | PAni OTs | 8.80 | 2.9 | 0.075 |
| Comp. Ex. 2 | PAni OTs/DBS | 6.77 | 3.2 | 0.21 |
| Ex. 2 | PAni OTs/3BO | 8.06 | 2.2 | 0.78 |
| Ex. 3 | PAni OTs/DNN | 6.44 | 1.3 | 0.017 |
| Ex. 4 | PAni OTs/CF10LA | 7.61 | 2.0 | 0.085 |
| Ex. 5 | PAni OTs/AS-M | 6.14 | 2.7 | 0.23 |
| Ex. 6 | PAni OTs/AS-H | 6.18 | 2.8 | 0.32 |

* Saturation Conductivity (taken to be conductivity at 40 vol%) Conductivity at 18.5 vol%
OTs - Tosylate
3BO - Decyldiphenyl ether disulfonate (DOWFAX 3BO)
CF10LA - Linear $C_{10}$ substituted diphenyl ether disulfonate (CALFAX 10LA-40)
AS-M - Alkane sulfonate (Aristol-M, MW=450)
AS-H - Alkane sulfonate (Aristol-H, MW = 500)

In general it is desirable for the percolation point to be as low as possible and the conductivity at 18.5 vol% to be as high as possible, since one desires to obtain the highest conductivity at the lowest loading. The single most important

parameter is the conductivity at the intermediate doping level, since such a point represents a practical compromise between obtaining high conductivity (for which the highest loading is desired) and the best mechanical properties for the blend (for which the lowest loading level is desired). On this basis the sample treated with Dowfax™ 3BO is the best followed by that treated with Aristol-H.

## Claims

1. An electrically conductive polymer particle comprising an ionized conjugated polymer doped with two or more dopants other than dinonylnaphthalene sulfonic acid, and wherein the dopants have one or more anionic moieties, and said particle having a layered skin-core structure with a skin region lying at or near the surface of the particle, and a core region at or near the core of the particle, with at least one first dopant predominating in the skin region, and at least one second dopant predominating in said core region, wherein said first dopant is derived from a dopant selected from organic species having one or more aliphatic moieties having at least three carbon atoms which are not substituted by an anionic moiety at more than one position, wherein the sum of said aliphatic moieties is such that, when said anionic moiety is substituted to an aromatic moiety, said derived dopant includes more than 12 aliphatic carbon atoms, and when said anionic moiety is substituted to an aliphatic moiety, the derived dopant includes more than 12 aliphatic carbon atoms.

2. A particle according to claim 1 wherein said species has a molecular weight equal to or less than 2000.

3. A particle according to claim 2 wherein said conjugated homopolymer or copolymer is a conjugated backbone homopolymer or copolymer.

4. A particle according to claim 3 wherein said conjugated backbone homopolymer or copolymer is a substituted or unsubstituted polyaniline.

5. A particle according to claim 4 wherein the polyaniline comprises repeat units of the Formulas II and III or a combination thereof:

Formula II

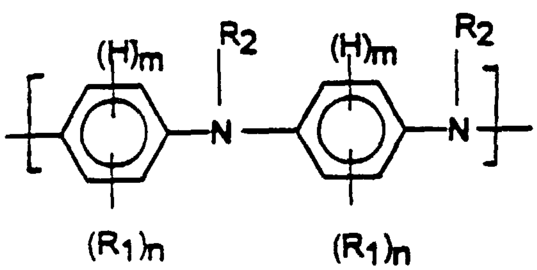

Formula III

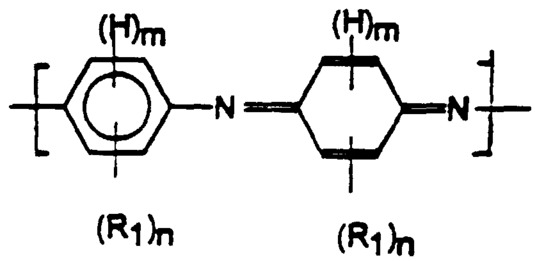

or a combination thereof,
wherein:

n and m are the same or different at each occurrence and are integers from 0 to 4, with the proviso that the sum of n and m is 4;
$R_1$ is phosphinic acid or a salt or ester thereof, phosphonic acid or a salt or ester thereof, sulfonic acid or a salt or ester thereof, boric acid or a salt or ester thereof, phosphoric acid or a salt or ester thereof, alkylamino, amino, hydroxy, sulfinic acid or a salt or ester thereof, nitro, carboxylic acid or a salt or ester thereof, halo, cyano, deuterium, or substituted or unsubstituted alkyl, alkenyl, alkoxy, cyclcalkyl, cycloalkenyl, alkanoyl, alkylthio, alkynyl, dialkylamino, arylamino, diarylamino, alkylarylamino, aryloxy, alkylthioalkyl, alkylaryl, arylalkyl, alkylsulfinyl, alkoxyalkyl, alkylsulfonyl, aryl, arylthio, arylsulfinyl, alkoxycarbonyl, alkylsilane, or arylsulfonyl, wherein permissible substituents are one or more amino, alkylamino, dialkylamino, arylamino, diarylamino, phosphinic acid or a salt or ester thereof, alkylarylamino, phosphonic acid or a salt or ester thereof, sulfonic acid or a salt or ester thereof, boric acid or a salt or ester thereof, sulfinic acid or a salt or ester thereof, phosphoric acid or a salt or ester thereof, carboxylic acid or a salt or ester thereof, halo, nitro, hydroxy, cyano or epoxy moieties; or any two $R_1$ substituents or any one $R_1$ substituent and $R_2$ substituent taken together may form substituted or unsubstituted alkylene, alkynylene or alkenylene chain completing a 3, 4, 5, 6, 7, 8, 9 or 10 membered aromatic, heteroalicyclic, heteroaromatic or alicyclic carbon ring, which ring may optionally include one or more divalent ester, carbonyl, nitrogen, sulfur, sulfinyl, sulfonyl or oxygen, wherein permissible substituents are one or more amino, alkylamino, phosphinic acid or a salt or ester thereof, dialkylamino, arylamino, diarylamino, alkylarylamino, phosphonic acid or a salt or ester thereof, sulfonic acid or a salt or ester thereof, boric acid or a salt or ester thereof, sulfinic acid or a salt or ester thereof, phosphoric acid or a salt or ester thereof, carboxylic acid or a salt or ester thereof, halo, nitro, hydroxy, cyano or epoxy, or $R_1$ is an aliphatic moiety having repeat units of the formulae:

$$-(OCH_2CH_2)_qO-CH_3,\ -(OCH_2CH(CH_3))_qO-CH_3-,$$

$$-(CH_2)_qCF_3,\ -(CF_2)_q-CF_3 \text{ or } -(CH_2)_qCH_3$$

wherein q is a positive whole number; and
$R_2$ is the same or different at each occurrence and is $R_1$ substituents or hydrogen.

**6.** A particle according to claim 5 wherein said homopolymer or copolymer is comprised of the Formulae IV:

Formula IV

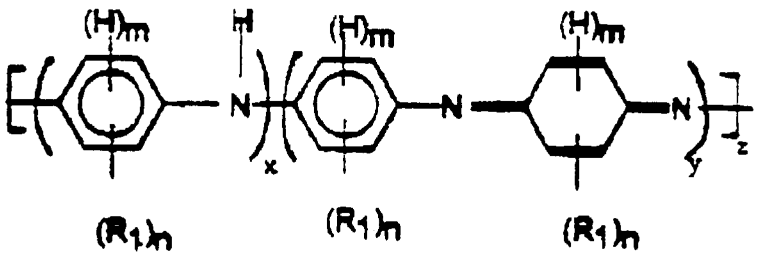

wherein:

x and y are the same or different at each occurrence and are integers equal to or greater than 0, with the proviso than the sum of x and y is greater than 0, and
z is the same or different at each occurrence and is an integer equal to or greater than 5;

wherein:

n is an integer from 0 or 1;
m is an integer from 3 or 4, with the proviso that the sum of n and m is equal to 4; and
$R_1$ is phenyl, or alkyl or alkoxy having from 1 to 12 carbon atoms, a protonic acid function or a salt or ester thereof, or alkyl, phenyl or alkoxy substituted with one or more of protonic acids or salts or esters thereof.

**7.** A particle according to claim 6 wherein:

n is an integer from 0 or 1;
m is an integer from 3 or 4, with the proviso that the sum of n and m is equal to 4;
$R_1$ is alkoxy or alkyl of from 1 to 12 carbon atoms, sulfonic acid or salts thereof, phosphoric acid or salts thereof, or phosphonic acid or salts thereof;
x is an integer equal to or greater than 1;
y is an integer equal to or greater than 0; and
z is an integer equal to or greater than 10.

**8.** A particle according to claim 7 wherein:

n is 0; and
m is 4.

**9.** A particle according to claim 1 wherein said dopant solute at or near the surface of said particle is of the formulae:

$$R_4(PO_3{=})_r(PO_2{=})_r(SO_2{-})_r(PO_2(R_6)^-)_r(SO_3{-})_r(CO_2{-})_r(PO(R_6)^-)_r(BO_2{=})_r$$

$$(PO_3\text{-}M)_r(PO_2\text{-}M)_r(BO_2\text{-}M)_r$$

wherein:

$R_4$ is an organic radical, with the proviso that the total number of aliphatic carbon atoms included in $R_4$ is greater than twelve when $R_4$ is a moiety in which the anionic moiety is directly bonded to the aromatic group and is greater than 12 when $R_4$ is a moiety in which the anionic moiety is bonded directly to an aliphatic moiety,

and with the further proviso that $R_4$ includes at least one aliphatic moiety of at least two carbon atoms;
M is hydrogen or a cation;
$R_6$ is hydrogen, alkyl, aryl, alkylaryl, aryloxy, arylalkoxy, alkylsulfinyl, alkylthio, alkylsulfonyl or alkoxy and
r is an integer equal to or greater than 1.

**10.** A particle according to claim 9 wherein said at least one first dopant solute predominately at or near the surface of said particle is derived from acid dopants of the formula:

$$R_4(PO_2(R_6)M)_g(PO_3M_2)_f(SO_3M)_c(CO_2M)_d(PO_2M_2)_t(SO_2M)_h$$

$$(PO(R_6)M)_i$$

or

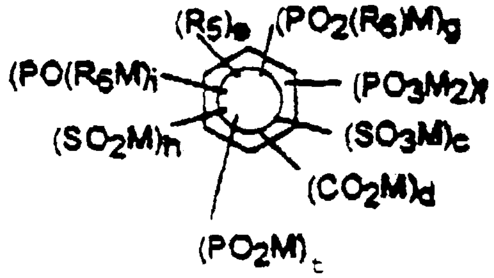

wherein:

M is $H^+$ or other metal or non-metal cation with tne proviso that at least one of M is $H^+$ or a moiety which can be thermally or chemically transformed into a proton under use conditions;
t is 0, 1, 2, 3 or 4;
h is 0, 1, 2, 3 or 4;
i is 0, 1, 2, 3 or 4;
c is 0, 1, 2, 3 or 4;
d is 0, 1, 2, 3 or 4;
f is 0, 1, 2, 3 or 4;
g is 0, 1, 2, 3 or 4, with the proviso that at least one of c, d, f, g, h, i or t is cther than 0;
e is 0, 1 or 2;
$R_4$ is alkyl or alkyl substituted with one or more aryl, alkylthio, alkoxycarbonyl, alkylcarbonyl, alkylcarbonylalkyl, alkylsulfinylalkyl, alkylsulfonylalkyl, alkylaminoalkyl, alkylamino, dialkylamino, alkylarylamino, (alkyl)arylamino, di(alkyl)arylamino, alkylaryl, alkylthioalkyl, alkoxy, alkoxyalkyl, alkylsulfinyl, alkylsulfonyl, dialkylaminoalkyl, aryloxyalkyl, aryloxyalkoxy, alkoxyaryl, alkylaryloxy or alkoxyaryloxy with the proviso that the total number of aliphatic carbon atoms included in $R_4$ is more than 12 carbon atoms and with the further proviso that $R_4$ includes at least one aliphatic moiety which includes at least four aliphatic carbons;
$R_5$ is the same or different at each occurrence and is substituted or unsubstituted alkyl, alkoxycarbonyl, alkylcarbonyl, alkylcarbonylalkyl, alkylsulfinylalkyl, alkylsulfonylalkyl, alkylaminoalkyl, alkylamino, dialkylamino, alkylarylamino, (alkyl)arylamino, di(alkyl)arylamino, alkylaryl, alkylthioalkyl, alkoxy, alkoxyalkyl, alkylaryl, alkylsulfinyl, alkylthio, alkylsulfonyl, dialkylaminoalkyl, aryloxyalkyl, aryloxyalkoxy, alkoxyaryl, alkylaryloxy or alkoxyaryloxy wherein permissible substituents include sulfonic acid or a salt or ester thereof, sulfinic acid or a salt or ester thereof, phosphonic acid or a salt or ester thereof, phosphinic acid or a salt or ester thereof, phosphoric acid or a salt or ester thereof, carboxylic acid or a salt or ester thereof, boric acid or a salt or ester thereof, perhaloalkyl, phenyl, alkoxy, aryloxy, halo, cyano, amino, haloalkyl, hydroxy, nitro, or any two or more $R_5$ substituents together may form an alkylene or alkenylene chain completing a ring system such as a fused or spiro ring system which may include one or more cyclic rings, which chain may be unsubstituted or substituted with one or more halo, hydroxy, nitro, cyano, amino, alkylamino, dialkylamino, arylamino, diarylamino,

alkylary amino, or $R_4$ or $R_5$ is a moiety of the formula:

$$-(OCH_2CH_2)_qOCH_3 \text{ or } -(OCH_2CH(CH_3))_qOCH_3$$

wherein:

q is a positive whole number from 6 to 12 or alkyl substituted with said moiety; with the proviso that the total number of aliphatic carbon atoms included in $R_5$ is greater than fourteen and with the further proviso that $R_5$ includes at least one aliphatic moiety of at least four carbon atoms; and

$R_6$ is hydrogen, alkyl, aryl, alkylaryl, aryloxy, arylalkoxy, alkylsulfinyl, alkylthio, alkylsulfonyl, or alkoxy.

**11.** A particle according to claim 10 wherein said at least one dopant solute at or near the surface of the particle is derived from acid dopants of the formula:

$$R_4(PO_2(R_6)M)_g(PO_3M_2)_f(SO_3M)_c(PO_2M_2)_t(SO_2M)_h(PO(R_6)M)_i$$

or

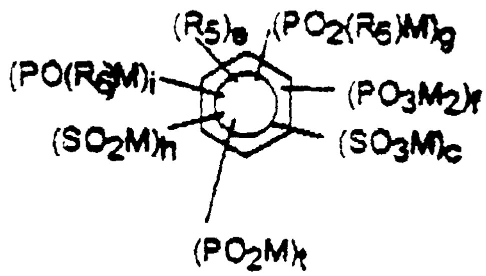

wherein:

c, t, f, g, h and i are the same or different at each occurrence and are 0, 1, 2, or 3, with the proviso that at least one of c, t, f or g, i or h is other than 0;

e is 1 or 2;

$R_4$ is substituted or unsubstituted alkyl wherein permissible substituents are selected from alkyl, alkoxy, halo, phenyl, phenoxy, phenyl or phenoxy substituted with one or more alkyl, alkoxy, sulfophenoxy, haloalkyl, perhaloalkyl, alkylthio or alkylthioalkyl with the proviso that the total number of aliphatic carbon atoms included in $R_4$ is more than 12 carbon atoms and with the further proviso that $R_4$ includes at least one aliphatic moiety which includes at least five aliphatic carbons;;

$R_5$ is the same or different at each occurrence and is alkoxyalkyl, alkyl, alkoxy or alkoxyalkyl, alkyl or alkoxy substituted with one or more halo groups or phenyl or phenoxy substituted with one or more alkyl, alkoxy, alkoxyalkyl or alkyl, alkoxy or alkoxyalkyl substituted with one or more halo groups, alkylsulfinyl, alkylsulfonyl, alkylsulfinylalkyl, alkylsulfonylalkyl, alkylthio or alkylthioalkyl substituents or any two $R_5$ substituents together may form an unsubstituted or substituted alkylene or alkenylene chain completing an aromatic or an alicyclic ring system wherein permissible substituents are as described above $R_5$ is a moiety of the formula:

$$-(OCH_2CH_2)_qOCH_3 \text{ or } -(OCH_2CH(CH_3))_q\ OCH_3$$

wherein:

q is a positive whole number from 6 to 12, with the proviso that the total number of aliphatic carbon atoms included in $R_5$ is greater than thirteen and with the further proviso that $R_5$ includes at least one aliphatic moiety of at least five carbon atoms;

$R_6$ is hydrogen, alkyl, alkoxy or substituted or unsubstituted phenoxy, phenyl or phenylalkyl wherein permissible substituents are alkyl, alkoxy or a combination thereof; and

M is $H^+$, or other metal or non-metal cation, with the proviso that at least one of M is $H^+$ or a moiety which

can be thermally or chemically transformed into a proton under use or process conditions.

**12.** A particle according to claim 10 wherein said at least one dopant solute predominately at or near the surface of said particle is derived from acid dopants of the formula:

$$R_4(PO_2M)_t(SO_3M)_c(PO_3)_f$$

or

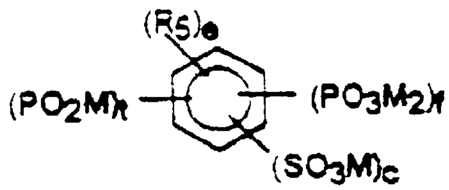

wherein:

c, f and t are the same or different and are 0, 1 or 2, with the proviso that at least one of c, f and t is not 0;
e is 1 or 2;
$R_4$ is alkyl or phenylalkyl, either unsubstituted or substituted with one or more phenoxy, sulfophenoxy or alkoxy substituents wherein the aliphatic moieties include more than 12 carbon atoms;
$R_5$ is the same or different at each occurrence and is alkoxyalkyl, alkyl, alkoxy, phenylalkoxy or phenylalkyl or sulfophenoxy, phenoxy or phenyl substituted with one or more alkyl or alkoxy substituents or two or more $R_5$ groups together may form a divalent alkenylene chain completing a naphthalene ring substituted with one or more alkyl or alkoxy groups with the proviso that the $R_5$ groups include more than 12 aliphatic carbon atoms; and
M is H $^+$ or other metal or non-metal cation, with the proviso that at least one of M is $H^+$ or is a moiety which can be thermally transformed into a proton under use or process conditions.

**13.** A particle according to claim 11 wherein said at least one dopant solute predominately at or near the surface of the particle are derived from acid dopants of the formula:

$$R_4(SO_3M)_c$$

or

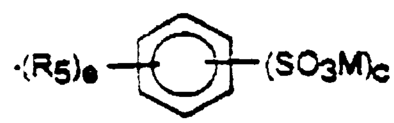

wherein:

c is 1, 2 or 3;
e is 0, 1 or 2;
$R_4$ is alkyl having more than 12 carbon atoms or said alkyl substituted with one or more halo substituents;
$R_5$ is alkyl, alkoxy, alkoxyalkyl, or phenyl, phenoxy, or sulfophenoxy substituted with one or more alkyl or alkoxy substituents or two or more $R_5$ groups together may form a divalent alkenylene chain completing a naphthalene ring substituted with one or more alkyl or alkoxy groups ; with the proviso that the total number of aliphatic carbon atoms included in $R_5$ is greater than fourteen and with the further proviso that and $R_5$ includes at least one aliphatic moiety of at least seven carbon atoms; and

M is $H^+$ or other metal or non-metal cation or a moiety which can be thermally transformed into a proton under process conditions.

**14.** A particle according to claim 13 wherein $R_5$ is alkyl or phenoxy substituted with one are more alkyl or sulfonic acid groups or any two $R_5$ groups together form an alkenylene chain completing a naphthalene ring substituted with one or more alkyl groups.

**15.** A particle according to claim 12 wherein said first dopant predominating at or near the surface of said particle is dinonylnaphthalenesulfonic acid, didecyldiphenyl ether disulfonic acid, hexadecyldiphenyl ether disulfonic acid, or alkanesulfonic acid containing more than 12 aliphatic carbon atoms.

**Patentansprüche**

**1.** Elektrisch leitfähiges Polymerteilchen, umfassend ein ionisiertes, konjugiertes Polymer, das mit zwei oder mehreren, von Dinonylnaphthalinsulfonsäure verschiedenen Dotierungsmitteln dotiert ist, und wobei die Dotierungsmittel eine oder mehrere anionische Gruppen aufweisen, und wobei das Teilchen eine geschichtete Mantel-Kern-Struktur mit einer Mantelregion, die an oder nahe der Oberfläche des Teilchens liegt, und einer Kernregion an oder nahe dem Kern des Teilchens aufweist, wobei mindestens ein erstes Dotierungsmittel in der Mantelregion überwiegt und mindestens ein zweites Dotierungsmittel in der Kernregion überwiegt, wobei das erste Dotierungsmittel von einem Dotierungsmittel abgeleitet ist, gewählt aus organischen Spezies mit einer oder mehreren aliphatischen Gruppen mit mindestens drei Kohlenstoffatomen, die nicht durch eine anionische Gruppe an mehr als einer Position substituiert sind, wobei die Summe der aliphatischen Gruppen derart ist, daß, wenn die anionische Gruppe an einer aromatischen Gruppe substituiert ist, das abgeleitete Dotierungsmittel mehr als 12 aliphatische Kohlenstoffatome beinhaltet, und wenn die anionische Gruppe an einer aliphatischen Gruppe substituiert ist, das abgeleitete Dotierungsmittel mehr als 12 aliphatische Kohlenstoffatome beinhaltet.

**2.** Teilchen nach Anspruch 1, wobei die Spezies ein Molekulargewicht von gleich oder weniger als 2000 aufweist.

**3.** Teilchen nach Anspruch 2, wobei das konjugierte Homopolymer oder Copolymer ein Homopolymer oder Copolymer mit einem konjugierten Grundgerüst ist.

**4.** Teilchen nach Anspruch 3, wobei das Homopolymer oder Copolymer mit konjugiertem Grundgerüst ein substituiertes oder unsubstituiertes Polyanilin ist.

**5.** Teilchen nach Anspruch 4, wobei das Polyanilin wiederkehrende Einheiten der Formeln II und III oder eine Kombination hiervon umfaßt:

Formel I

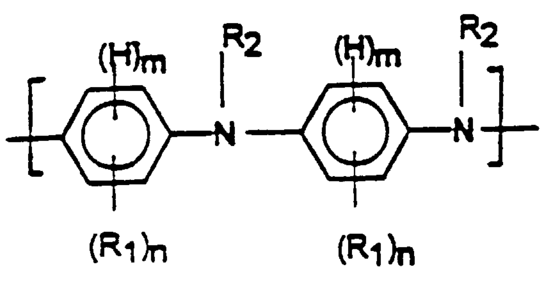

Formel II

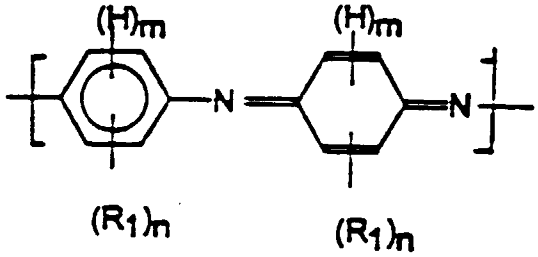

oder eine Kombination hiervon,
worin bedeuten:

n und m, die bei jedem Vorkommen gleich oder verschieden sind, jeweils ganze Zahlen von 0 bis 4, mit der Maßgabe, daß die Summe aus n und m 4 ist;

$R_1$ Phosphinsäure oder ein Salz oder Ester hiervon, Phosphonsäure oder ein Salz oder Ester hiervon, Sulfonsäure oder ein Salz oder Ester hiervon, Borsäure oder ein Salz oder Ester hiervon, Phosphorsäure oder ein Salz oder Ester hiervon, Alkylamino, Amino, Hydroxy, Sulfinsäure oder ein Salz oder Ester hiervon, Nitro, Carbonsäure oder ein Salz oder Ester hiervon, Halogen, Cyano. Deuterium, oder substituiertes oder unsubstituiertes Alkyl, Alkenyl, Alkoxy, Cycloalkyl, Cycloalkenyl, Alkanoyl, Alkylthio, Alkinyl, Dialkylamino, Arylamino, Diarylamino, Alkylarylamino, Aryloxy, Alkylthioalkyl, Alkylaryl, Arylalkyl, Alkylsulfinyl, Alkoxyalkyl, Alkylsulfonyl, Aryl, Arylthio, Arylsulfinyl, Alkoxycarbonyl, Alkylsilan oder Arylsulfonyl, wobei zulässige Substituenten ein oder mehrere Amino, Alkylamino, Dialkylamino, Arylamino, Diarylamino, Phosphinsäure oder ein Salz oder Ester hiervon, Alkylarylamino, Phosphonsäure oder ein Salz oder Ester hiervon, Sulfonsäure oder ein Salz oder Ester hiervon, Borsäure oder ein Salz oder Ester hiervon, Sulfinsäure oder ein Salz oder Ester hiervon, Phosphorsäure oder ein Salz oder Ester hiervon, Carbonsäure oder ein Salz oder Ester hiervon, Halogen, Nitro, Hydroxy, Cyano oder Epoxygruppen sind; oder beliebige zwei $R_1$-Substituenten oder ein beliebiger $R_1$-Substituent und $R_2$-Substituent können zusammengenommen eine substituierte oder unsubstituierte Alkylen-, Alkinylen- oder Alkenylenkette bilden, die einen 3-,4-,5-,6-,7-,8-,9- oder 10-gliedrigen aromatischen, heteroalicyclischen, heteroaromatischen oder alicyclischen Kohlenstoffring vervollständigt, welcher Ring wahlweise eines oder mehrere aus zweiwertiger Ester, Carbonyl, Stickstoff, Schwefel, Sulfinyl, Sulfonyl oder Sauerstoff beinhalten kann, wobei zulässige Substituenten ein oder mehrere Amino, Alkylamino, Phosphinsäure oder ein Salz oder Ester hiervon, Dialkylamino, Arylamino, Diarylamino, Alkylarylamino, Phosphonsäure oder ein Salz oder Ester hiervon, Sulfonsäure oder ein Salz oder Ester hiervon, Borsäure oder ein Salz oder Ester hiervon, Sulfinsäure oder ein Salz oder Ester hiervon, Phosphorsäure oder ein Salz oder Ester hiervon, Carbonsäure oder ein Salz oder Ester hiervon, Halogen, Nitro, Hydroxy, Cyano oder Epoxy sind, oder $R_1$ ist eine aliphatische Gruppe mit wiederkehrenden Einheiten der Formeln

$$-(OCH_2CH_2)_qO-CH_3,\ -(OCH_2CH(CH_3))_qO-CH_3-,\ -(CH_2)_qCF_3,\ -(CF_2)_q-CF_3 \text{ oder } -(CH_2)_qCH_3$$

worin q eine positive ganze Zahl ist, und

$R_2$, das bei jedem Vorkommen gleich oder verschieden ist, $R_1$-Substituenten oder Wasserstoff.

**6.** Teilchen nach Anspruch 5, wobei das Homopolymer oder Copolymer die Formel IV umfaßt:

Formel IV

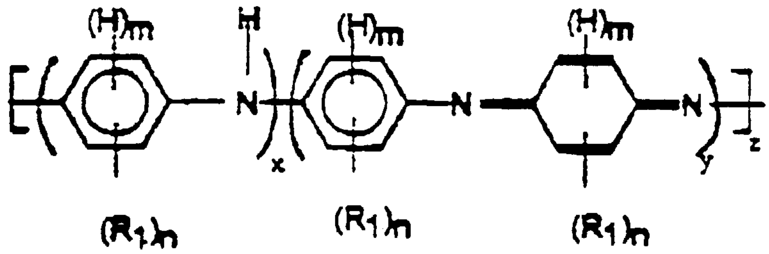

worin bedeuten:

x und y, die bei j edem Vorkommen gleich oder verschieden sind, ganze Zahlen von gleich oder größer als 0. mit der Maßgabe, daß die Summe aus x und y größer als 0 ist, und
z, das bei jedem Vorkommen gleich oder verschieden ist, eine ganze Zahl von gleich oder größer als 5;

worin

n eine ganze Zahl von 0 oder 1 ist:
m eine ganze Zahl von 3 oder 4 ist, mit der Maßgabe, daß die Summe aus n und m gleich 4 ist; und
$R_1$ Phenyl oderAlkyl oderAlkoxy mit 1 bis 12 Kohlenstoffatomen, eine Protonensäurefunktion oder ein Salz oder Ester hiervon, oder Alkyl, Phenyl oder Alkoxy, substituiert mit einer oder mehreren Protonensäuren oder Salzen oder Estern hiervon.

**7.** Teilchen nach Anspruch 6, wobei

n eine ganze Zahl von 0 oder 1 ist;
m eine ganze Zahl von 3 oder 4 ist, mit der Maßgabe, daß die Summe aus n und m gleich 4 ist;
$R_1$ Alkoxy oder Alkyl mit 1 bis 12 Kohlenstoffatomen, Sulfonsäure oder Salze hiervon, Phosphorsäure oder Salze hiervon oder Phosphonsäure oder Salze hiervon ist;
x eine ganze Zahl von gleich oder größer als 1 ist;
y eine ganze Zahl von gleich oder größer als 0 ist; und
z eine ganze Zahl von gleich oder größer als 10 ist.

**8.** Teilchen nach Anspruch 7, wobei

n 0 ist; und
m 4 ist.

**9.** Teilchen nach Anspruch 1, wobei das aufgelöste Dotierungsmittel an oder nahe der Oberfläche des Teilchens den Formeln

$$R_4(PO_3=)_r(PO_2=)_r(SO_2-)_r(PO_2(R_6)^-)_r(SO_3-)_r(CO_2-)_r(PO(R_6)^-)_r(BO_2=)_r(PO_3-M)_r(PO_2-M)_r(BO_2-M)_r$$

entspricht,
worin bedeuten:

$R_4$ ein organischer Rest, mit der Maßgabe, daß die Gesamtanzahl in $R_4$ eingeschlossener, aliphatischer Kohlenstoffatome größer als 12 ist, wenn $R_4$ eine Gruppe ist, in welcher die anionische Gruppe direkt an die aromatische Gruppe gebunden ist, und größer als 12 ist, wenn $R_4$ eine Gruppe ist, in welcher die anionische Gruppe direkt an eine aliphatische Gruppe gebunden ist, und weiterhin mit der Maßgabe, daß $R_4$ mindestens eine aliphatische Gruppe mit mindestens zwei Kohlenstoffatomen beinhaltet;
M Wasserstoff oder ein Kation;
$R_6$ Wasserstoff, Alkyl, Aryl, Alkylaryl, Aryloxy, Arylalkoxy, Alkylsulfinyl, Alkylthio, Alkylsufonyl oder Alkoxy und

r eine ganze Zahl von gleich oder größer als 1.

**10.** Teilchen nach Anspruch 9, wobei das mindestens eine erste gelöste Dotierungsmittel vorwiegend an oder nahe der Oberfläche des Teilchens von Dotierungsmitteln der Formel abgeleitet ist:

$$R_4(PO_2(R_6)M)_g(PO_3M_2)_f(SO_3M)_c(CO_2M)_d(PO_2M_2)_t(SO_2M)_h(PO(R_6)M)_i$$

oder

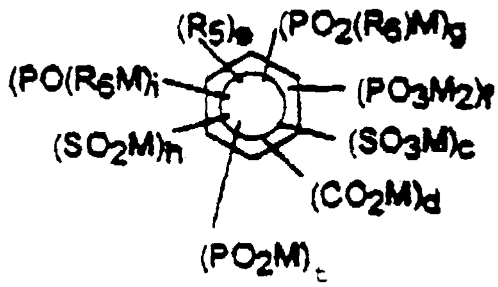

worin bedeuten:

M $H^+$ oder ein anderes Metall- oder Nichtmetallkation, mit der Maßgabe, daß mindestens eines von M $H^+$ oder eine Gruppe ist. welche thermisch oder chemisch unter Anwendungsbedingungen in ein Proton überführt werden kann;
t 0, 1, 2, 3 oder 4;
h 0, 1, 2, 3 oder 4;
1 0, 1, 2, 3 oder 4;
c 0, 1, 2, 3 oder 4;
d 0, 1, 2, 3 oder 4;
f 0, 1, 2, 3 oder 4;
g 0, 1, 2, 3 oder 4, mit der Maßgabe, daß mindestens eines von c, d, f, g, h, i oder t von 0 verschieden ist;
e 0, 1 oder 2;
$R_4$ Alkyl oder Alkyl substituiert mit einem oder mehreren Alkyl, Alkylthio, Alkoxycarbyl, Alkylcarbonyl, Alkylcarbonylalkyl, Alkylsulfinylalkyl, Alkylsulfonylalkyl, Alkylaminoalkyl, Alkylamino, Dialkylamino, Alkylarylamino, (Alkyl)arylamino, Di(alkyl)arylamino, Alkylaryl, Alkylthioalkyl. Alkoxy. Alkoxyalkyl, Alkylsulfinyl, Alkylsulfonyl, Dialkylaminoalkyl, Aryloxyalkyl. Aryloxyalkoxy, Alkoxyaryl, Alkylaryloxy oder Alkoxyaryloxy, mit der Maßgabe, daß die Gesamtanzahl von in $R_4$ eingeschlossenen aliphatischen Kohlenstoffatomen mehr asl 12 Kohlenstoffatome ist, und mit der weiteren Maßgabe, daß $R_4$ mindestens eine aliphatische Gruppe beinhaltet, die mindestens 4 aliphatische Kohlenstoffatome enthält;
$R_5$, das bei jedem Vorkommen gleich oder verschieden ist, substituiertes oder unsubstituiertes Alkyl. Alkoxycarbonyl, Alkylcarbonyl, Alkylcarbonylalkyl, Alkylsulfinylalkyl, Alkylsulfonylalkyl, Alkylaminoalkyl. Alkylamino, Dialkylamino, Alkylarylamino, (Alkyl)arylamino, Di(alkyl)arylamino, Alkylaryl, Alkylthioalkyl, Alkoxy, Alkoxyalkyl, Alkylaryl, Alkylsufinyl, Alkylthio, Alkylsulfonyl, Dialkylaminoalkyl, Aryloxyalkyl, Aryloxyalkoxy, Alkoxyaryl, Alkylaryloxy oder Alkoxyaryloxy, wobei zulässige Substituenten Sulfonsäure oder ein Salz oder einen Ester hiervon, Sulfinsäure oder ein Salz oder einen Ester hiervon, Phosphonsäure oder ein Salz oder einen Ester hiervon, Phosphinsäure oder ein Salz oder ein Ester hiervon, Phosphorsäure oder ein Salz oder einen Ester hiervon, Carbonsäure oder ein Salz oder einen Ester hiervon, Borsäure oder ein Salz oder einen Ester hiervon, Perhalogenalkyl, Phenyl, Alkoxy, Aryloxy, Halogen, Cyano, Amino, Halogenalkyl, Hydroxy, Nitro einschließen, oder beliebige zwei oder mehrere $R_5$-Substituenten können zusammen eine Alkylen- oder Alkenylenkette bilden, die ein Ringsystem, wie ein kondensiertes oder Spiroringsystem vervollständigt, das einen oder mehrere cyclische Ringe beinhalten kann, welche Kette unsubstituiert oder substituiert sein kann mit einem oder mehreren aus Halogen, Hydroxy, Nitro, Cyano, Amino, Alkylamino, Dialkylamino, Arylamino, Diarylamino, Alkylarylamino, oder $R_4$ oder $R_5$ ist eine Gruppe der Formel:

$$-(OCH_2CH_2)_qOCH_3 \text{ oder } -OCH_2CH(CH_3))_qOCH_3$$

worin bedeuten:

q eine positive ganze Zahl von 6 bis 12 oder mit dieser Gruppe substituiertes Alkyl; mit der Maßgabe, daß die Gesamtanzahl von in $R_5$ eingeschlossenen aliphatischen Kohlenstoffatomen größer als 14 ist, und mit der weiteren Maßgabe, daß $R_5$ mindestens eine aliphatische Gruppe mit mindestens 4 Kohlenstoffatomen beinhaltet; und

$R_6$ Wasserstoff, Alkyl, Aryl, Alkylaryl, Aryloxy, Arylalkoxy, Alkylsulfinyl, Alkylthio, Alkylsulfonyl oder Alkoxy.

**11.** Teilchen nach Anspruch 10, wobei das mindestens eine gelöste Dotierungsmittel an oder nahe der Oberfläche des Teilchens von Säuredotierungsmitteln der Formel abgeleitet ist:

$$R_4(PO_2(R_6)M)_g(PO_3M_2)_f(SO_3M)_c(PO_2M_2)_t(SO_2M)_h(PO(R_6)M)_i$$

oder

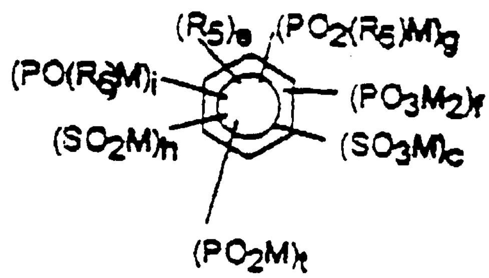

worin bedeuten:

c, t, f, g, h und 1, welche bei jedem Vorkommen gleich oder verschieden sind, 0, 1, 2 oder 3, mit der Maßgabe, daß mindestens eines von c, t, foder g, i oder h von 0 verschieden ist;

e 1 oder 2;

$R_4$ substituiertes oder unsubstituiertes Alkyl, wobei zulässige Substituenten gewählt sind aus Alkyl, Alkoxy, Halogen, Phenyl, Phenoxy, Phenyl oder Phenoxy, substituiert mit einem oder mehreren aus Alkyl, Alkoxy, Sulfophenoxy, Halogenalkyl, Perhalogenalkyl, Alkylthio oder Alkylthioalkyl, mit der Maßgabe, daß die Gesamtanzahl von in $R_4$ eingeschlossenen aliphatischen Kohlenstoffatomen mehr als 12 Kohlenstoffatome ist, und mit der weiteren Maßgabe, daß $R_4$ mindestens eine aliphatische Gruppe beinhaltet, die mindestens 5 aliphatische Kohlenstoffatome enthält;

$R_5$, das bei jedem Vorkommen gleich oder verschieden ist, Alkoxyalkyl, Alkyl, Alkoxy oderAlkoxyalkyl, Alkyl oder Alkoxy, substituiert mit einem oder mehreren Halogengruppen oder Phenyl oder Phenoxy, substituiert mit einem oder mehreren aus Alkyl, Alkoxy, Alkoxyalkyl oder Alkyl, Alkoxy oder Alkoxyalkyl, substituiert mit einem oder mehreren Halogengruppen, Alkylsulfinyl, Alkylsulfonyl, Alkylsufinylalkyl, Alkylsulfonylalkyl, Alkylthio oder Alkylthioalkyl-Substituenten, oder beliebige zwei $R_5$-Substituenten können zusammen eine unsubstituierte oder substituierte Alkylen- oder Alkenylenkette bilden, die ein aromatisches oder alicyclisches Ringsystem vervollständigt, wobei zulässige Substituenten wie oben beschrieben sind, oder $R_5$ ist eine Gruppe der Formel

$$-(OCH_2CH_2)_qOCH_3 \text{ oder } -OCH_2CH(CH_3))_qOCH_3$$

worin bedeuten:

q eine positive ganze Zahl von 6 bis 12, mit der Maßgabe, daß die Gesamtanzahl von in $R_5$ eingeschlossenen aliphatischen Kohlenstoffatomen größer als 13 ist, und mit der weiteren Maßgabe, daß $R_5$ minde-

stens eine aliphatische Gruppe mit mindestens 5 Kohlenstoffatomen beinhaltet;
$R_6$ Wasserstoff, Alkyl, Alkoxy oder substituiertes oder unsubstituiertes Phenoxy, Phenyl oder Phenylalkyl, wobei zulässige Substituenten Alkyl, Alkoxy oder eine Kombination hiervon sind; und
M $H^+$ oder ein anderes Metall- oder Nichtmetallkation, mit der Maßgabe, daß mindestens eines von M $H^+$ oder eine Gruppe ist, welche thermisch oder chemisch unter Anwendungs- oder Prozeßbedingungen in ein Proton überführt werden kann.

**12.** Teilchen nach Anspruch 10, wobei das mindestens eine gelöste Dotierungsmittel vorwiegend an oder nahe der Oberfläche des Teilchens von Säuredotierungsmitteln der Formel abgeleitet ist:

$$R_4(PO_2M)_t(SO_3M)_c(PO_3)_f$$

oder

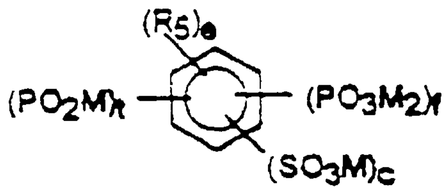

worin bedeuten:

c, f und t, die gleich oder verschieden sind, 0, 1 oder 2, mit der Maßgabe, daß mindestens eines von c, f und t nicht 0 ist;
e 1 oder 2;
$R_4$ Alkyl oder Phenylalkyl, entweder unsubstituiert oder substituiert mit einem oder mehreren aus Phenoxy, Sulfophenoxy oder Alkoxy-Substituenten, wobei die aliphatischen Gruppen mehr als 12 Kohlenstoffatome beinhalten;
$R_5$, das bei jedem Vorkommen gleich oder verschieden ist, Alkoxyalkyl, Alkyl, Alkoxy, Phenylalkoxy oder Phenylalkyl oder Sulfophenoxy, Phenoxy oder Phenyl, substituiert mit einem oder mehreren Alkyl- oder Alkoxysubstituenten, oder 2 oder mehrere $R_5$-Gruppen können zusammen eine zweiwertige Alkenylenkette bilden, die einen Naphthalinring vervollständigt, substituiert mit einer oder mehreren Alkyl- oder Alkoxygruppen, mit der Maßgabe, daß die $R_5$-Gruppen mehr als 12 aliphatische Kohlenstoffatome beinhaltend; und
M $H^+$ oder ein anderes Metall- oder Nichtmetallkation, mit der Maßgabe, daß mindestens eines von M $H^+$ oder eine Gruppe ist, welche thermisch unter Anwendungs- oder Prozeßbedingungen in ein Proton überführt werden kann.

**13.** Teilchen nach Anspruch 11, wobei das mindestens eine gelöste Dotierungsmittel vorwiegend an oder nahe der Oberfläche des Teilchens von Säuredotierungsmitteln der Formel abgeleitet sind:

$$R_4(SO_3M)_c$$

oder

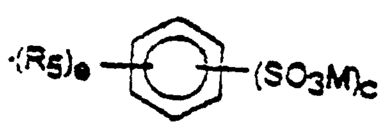

worin bedeuten:

c 1, 2 oder 3;

e 0, 1 oder 2;

$R_4$ Alkyl mit mehr als 12 Kohlenstoffatomen oder dieses Alkyl, substituiert mit einem oder mehreren Halogensubstituenten;

$R_5$ Alkyl, Alkoxy, Alkoxyalkyl oder Phenyl, Phenoxy oder Sulfophenoxy, substituiert mit einem oder mehreren Alkyl- oder Alkoxysubstituenten, oder 2 oder mehrere $R_5$-Gruppen können zusammen eine zweiwertige Alkylenkette bilden, die einen Naphthalinring vervollständigt, substituiert mit einer oder mehreren Alkyl- oderAlkoxygruppen; mit der Maßgabe, daß die Gesamtanzahl von in $R_5$ eingeschlossenen aliphatischen Kohlenstoffatomen größer als 14 ist, und mit der weiteren Maßgabe, daß $R_5$ mindestens eine aliphatische Gruppe mit mindestens 7 Kohlenstoffatomen beinhaltet; und

M $H^+$ oder ein anderes Metall- oder Nichtmetallkation oder eine Gruppe, die unter Prozeßbedingungen thermisch in ein Proton überführt werden kann.

**14.** Teilchen nach Anspruch 13, wobei $R_5$ Alkyl oder Phenoxy ist, substituiert mit einer oder mehreren Alkyl- oder Sulfonsäuregruppen, oder beliebige zwei $R_5$-Gruppen bilden zusammen eine Alkenylenkette, die einen Naphthalinring vervollständigt, der mit einer oder mehreren Alkylgruppen substituiert ist.

**15.** Teilchen nach Anspruch 12, wobei das erste Dotierungsmittel vorwiegend an oder nahe der Oberfläche des Teilchens Dinonylnaphthalinsulfonsäure, Didecyldiphenyletherdisulfonsäure, Hexadecyldiphenyletherdisulfonsäure oder Alkansulfonsäure, die mehr als 12 aliphatische Kohlenstoffatome enthält, ist.

**Revendications**

**1.** Particule polymérique conductrice électriquement comprenant un polymère conjugué ionisé dopé avec deux ou plus de deux dopants autres que l'acide dinonylnaphtalène-sulfonique, et dans laquelle les dopants ont un ou plusieurs fragments anioniques, et ladite particule présentant une structure stratifiée de type peau/coeur avec une zone de peau se trouvant proche ou au niveau de la surface de la particule et une zone de coeur se trouvant au niveau ou proche du coeur de la particule, au moins un premier dopant prédominant dans la zone de peau et au moins un second dopant prédominant dans ladite zone de coeur, dans laquelle ledit premier dopant est dérivé d'un dopant choisi parmi des espèces organiques qui présentent un ou plusieurs fragments aliphatiques comportant au moins 3 atomes de carbone qui ne portent pas comme substituant un fragment anionique sur plus d'une position, dans laquelle la somme desdits fragments aliphatiques est telle que, quand un fragment aromatique est substitué par ledit fragment anionique, ledit dopant dérivé comporte plus de 12 atomes de carbone aliphatiques, et quand un fragment aliphatique est substitué par ledit fragment anionique, le dopant dérivé comporte plus de 12 atomes de carbone aliphatiques.

**2.** Particule selon la revendication 1, dans laquelle lesdites espèces présentent une masse moléculaire inférieure ou égale à 2000.

**3.** Particule selon la revendication 2, dans laquelle ledit homopolymère ou copolymère conjugué est un homopolymère ou copolymère à squelette conjugué.

**4.** Particule selon la revendication 3, dans laquelle ledit homopolymère ou copolymère à squelette conjugué est une polyaniline substituée ou non.

**5.** Particule selon la revendication 4, dans laquelle la polyaniline comprend des motifs répétés répondant aux formules II et III ou une combinaison de ces derniers :

Formule II

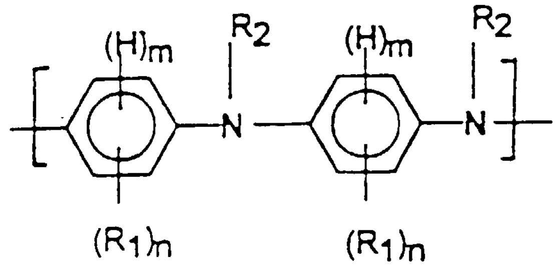

Formule III

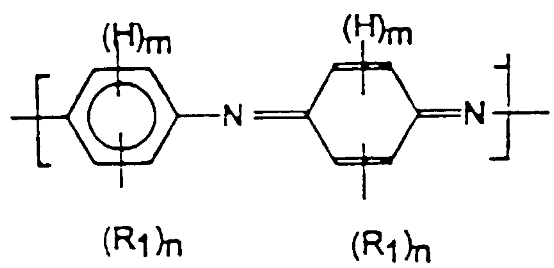

ou une combinaison des deux, dans lesquelles :

- n et m sont identiques ou différents à chaque occurence et représentent des nombres entiers allant de 0 à 4, à condition que la somme de n et de m soit égale à 4 ;
- $R_1$ représente un groupe acide phosphinique ou sel ou ester de ce dernier. acide phosphonique ou sel ou ester de ce dernier, acide sulfonique ou sel ou ester de ce dernier, acide borique ou sel ou ester de ce dernier, acide phosphorique ou sel ou ester de ce dernier, alkylamino, amine, hydroxy, acide sulfinique ou sel ou ester de ce dernier, nitro, acide carboxylique ou sel ou ester de ce dernier, un atome d'halogène, un groupe cyano, un atome de deutérium ou un groupe substitué ou non, de type alkyle, alcényle, alcoxy, cycloalkyle, cycloalcényle, acyle, alkylthio, alcynyle, dialkylamino, arylamino, diarylamino, alkylarylamino, aryloxy, alkylthioalkyl, alkylaryle, arylalkyle, alkylsulfinyle, alcoxyalkyle, alkylsulfonyle, aryle. arylthio, arylsulfinyle, alcoxycarbonyle, alkylsilane ou arylsulfonyle dans lequel les substituants admissibles sont un ou plusieurs des fragments amino, alkylamino, dialkylamino, arylamino, diarylamino, acide phosphinique ou sel ou ester de ce dernier, alkylarylamino, acide phosphonique ou sel ou ester de ce dernier, acide sulfonique ou sel ou ester de ce dernier, acide borique ou sel ou ester de ce dernier, acide sulfinique ou sel ou ester de ce dernier, acide phosphorique ou sel ou ester de ce dernier, acide carboxylique ou sel ou ester de ce dernier, un atome d'halogène, un groupe nitro, hydroxy, cyano ou époxy ; ou n'importe quels substituants $R_1$ au nombre de deux ou n'importe quels substituants $R_1$ et $R_2$ pris ensemble peuvent former une chaîne alkylène, alcynylène ou alcénylène substituée ou non, complétant un noyau carboné aromatique, hétéroalicyclique. hétéroaromatique ou alicyclique à 3, 4, 5, 6, 7, 8, 9 ou 10 chaînons, lequel noyau peut éventuellement comprendre un ou plusieurs groupes divalents de type ester, carbonyle, sulfinyle, sulfonyle, un atome d'azote, de soufre ou d'oxygène divalent, dans lesquels les substituants admissibles sont un ou plusieurs groupes amino, alkylamino, acide phosphonique ou sel ou ester de ce dernier, dialkylamino, arylamino, diarylamino, alkylarylamino, acide phosphonique ou sel ou ester de ce dernier, acide sulfonique ou sel ou ester de ce dernier, acide borique ou sel ou ester de ce dernier, acide sulfinique ou sel ou ester de ce dernier, acide phosphorique ou sel ou ester de ce dernier, acide carboxylique ou sel ou ester de ce dernier, atomes d'halogène, groupes nitro, hydroxy, cyano ou époxy ; ou $R_1$ représente un fragment aliphatique comportant des motifs répétés répondant aux formules :

$$-(OCH_2CH_2)_qO-CH_3,\ -(OCH_2CH(CH_3))_qO-CH_3,\ -(CH_2)_qCF_3,\ -(CF_2)_qCF_3 \text{ ou } -(CH_2)_qCH_3,$$

dans lesquelles :

- q représente un nombre entier positif ; et
- les groupes $R_2$ sont identiques ou différents à chaque occurence et représentent les substituants $R_1$ ou un atome d'hydrogène.

**6.** Particule selon la revendication 5, dans laquelle ledit homopolymère ou copolymère répond à la formule IV :

Formule IV

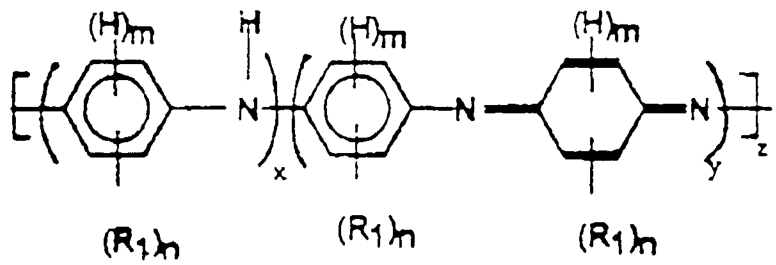

dans laquelle :

- x et y sont identiques ou différents à chaque occurence et représentent des nombres entiers supérieurs ou égaux à 0, à condition que la somme de x et de y soit supérieure à 0, et
- z est identique ou différent à chaque occurence et représente un nombre entier supérieur ou égal à 5 ;

dans laquelle :

- n représente un nombre entier valant 0 ou 1 ;
- m représente un nombre entier valant 3 ou 4, à condition que la somme de n et de m soit égale à 4 ; et
- $R_1$ représente un groupe phényle, ou un groupe alkyle ou alcoxy comportant de 1 à 12 atomes de carbone, une fonction acide protonique ou un sel ou ester de cette dernière, ou un groupe alkyle, phényle ou alcoxy substitué par un ou plusieurs des acides protoniques ou sels ou esters de ces derniers.

**7.** Particule selon la revendication 6, dans laquelle :

- n représente un nombre entier valant 0 ou 1,
- m représente un nombre entier valant 3 ou 4, à condition que la somme de n et de m soit égale à 4 ;
- $R_1$ représente un groupe alcoxy ou alkyle comportant de 1 à 12 atomes de carbone, acide sulfonique ou sel de ce dernier, acide phosphorique ou sel de ce dernier, ou acide phosphonique ou sel de ce dernier ;
- x représente un nombre entier supérieur ou égal à 1 ;
- y représente un nombre entier supérieur ou égal à 0 ; et
- z représente un nombre entier supérieur ou égal à 10.

**8.** Particule selon la revendication 7, dans laquelle n vaut 0 et m vaut 4.

**9.** Particule selon la revendication 1, dans laquelle ledit soluté dopant qui se trouve au niveau ou proche de la surface de ladite particule. répond aux formules :

$$R_4(PO_3^{=})_r(PO_2^{=})_r(SO_2^{-})_r(PO_2(R_6)^{-})_r(SO_3^{-})_r(CO_2^{-})_r(PO(R_6)^{-})_r(BO_2^{=})_r(PO_3\text{-}M)_r(PO_2\text{-}M)_r(BO_2\text{-}M)_r$$

dans laquelle :

- $R_4$ représente un groupe organique, à condition que le nombre total d'atomes de carbone aliphatiques compris dans $R_4$ soit supérieur à 12 quand $R_4$ représente un fragment dans lequel le fragment anionique est directement lié au groupe aromatique, et soit supérieur à 12 quand $R_4$ représente un fragment dans lequel le fragment anionique est lié directement à un fragment aliphatique, et avec la condition supplémentaire que $R_4$ comprenne au moins un fragment aliphatique comportant au moins deux atomes de carbone ;

- M représente un atome d'hydrogène ou un cation ;
- $R_6$ représente un atome d'hydrogène, un groupe alkyle, aryle, alkylaryle. aryloxy, arylalcoxy, alkylsulfinyle, alkylthio, alkylsulfonyle ou alcoxy ; et
- r est un nombre entier supérieur ou égal à 1.

**10.** Particule selon la revendication 9, dans laquelle ledit premier soluté dopant, au nombre d'au moins un, prédominant au niveau ou à proximité de la surface de ladite particule, est dérivé des dopants acides répondant à la formule :

$$R_4(PO_2(R_6)M)_g(PO_3M_2)_f(SO_3M)_c(CO_2M)_d(PO_2M_2)_t(SO_2M)_h(PO(R_6)M)_i$$

ou

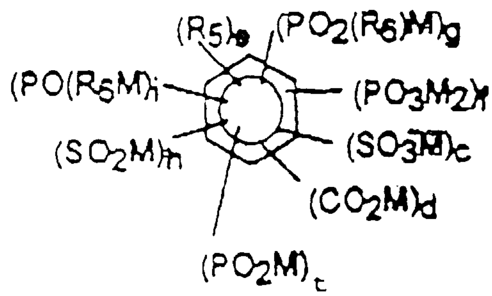

dans lesquelles :

- M représente $H^+$ ou un autre cation métallique ou non, à condition qu'au moins l'un des M représente $H^+$ ou un fragment que l'on peut transformer par voie thermique ou chimique en un proton dans des conditions d'utilisation ;
- t vaut 0, 1, 2, 3 ou 4 ;
- h vaut 0, 1, 2, 3 ou 4 ;
- i vaut 0, 1, 2, 3 ou 4 ;
- c vaut 0, 1, 2, 3 ou 4 ;
- d vaut 0, 1, 2, 3 ou 4 ;
- f vaut 0, 1, 2, 3 ou 4 ;
- g vaut 0, 1, 2, 3 ou 4 , à condition qu'au moins l'un des c, d, f, g, h, i et t soit différent de 0 ;
- e vaut 0, 1 ou 2 ;
- $R_4$ représente un groupe alkyle ou alkyle substitué par un ou plusieurs groupes aryle, alkylthio, alcoxycarbonyle, alkylcarbonyle, alkylcarbonylalkyle, alkylsulfinylalkyle, alkylsulfonylalkyle, alkylaminoalkyle, alkylamino, dialkylamino, alkylarylamino, (alkyl)arylamino, di(alkyl)arylamino, alkylaryle, alkylthioalkyle, alcoxy, alcoxyalkyle, alkylsulfinyle, alkylsulfonyle, dialkylaminoalkyle, aryloxyalkyle, aryloxyalcoxy, alcoxyaryle, alkylaryloxy ou alcoxyaryloxy à condition que le nombre total d'atomes de carbone aliphatiques compris dans $R_4$ soit supérieur à 12 atomes de carbone et avec la condition supplémentaire que $R_4$ comprenne au moins un fragment aliphatique qui comporte au moins 4 atomes de carbone aliphatiques ;
- les groupes $R_5$ sont identiques ou différents à chaque occurence et représentent un groupe substitué ou non, de type alkyle, alcoxycarbonyle, alkylcarbonyle, alkylcarbonylalkyle, alkylsulfinylalkyle, alkylsulfonylalkyle, alkylaminoalkyle, alkylamino, dialkylamino, alkylarylamino, (alkyl)arylamino, di(alkyl)arylamino, alkylaryle, alkylthioalkyle. alcoxy, alcoxyalkyle, alkylaryle, alkylsulfinyle, alkylthio, alkylsulfonyle, dialkylaminoalkyle, aryloxyalkyle, aryloxyalcoxy, alcoxyaryle, alkylaryloxy ou alcoxyaryloxy, dans lesquels les substituants admissibles englobent les groupes acide sulfonique ou sel ou ester de ce dernier. acide sulfinique ou sel ou ester de ce dernier, acide phosphonique ou sel ou ester de ce dernier, acide phosphinique ou sel ou ester de ce dernier, acide phosphorique ou sel ou ester de ce dernier, acide carboxylique ou sel ou ester de ce dernier, acide borique ou sel ou ester de ce dernier, perhalogénoalkyle, phényle, alcoxy, aryloxy, un atome d'halogène, un groupe cyano, amino, halogénoalkyle, hydroxy, nitro, ou n'importe quels substituants $R_5$ au nombre de

deux ou plus, peuvent former ensemble une chaîne alkylène ou alcénylène complétant un système cyclique tel qu'un système de noyaux accolés ou spiro qui peut comprendre un ou plusieurs noyaux cycliques, laquelle chaîne peut être substituée ou non, par un ou plusieurs atomes d'halogène, groupes hydroxy, nitro, cyano, amino, alkylamino, dialkylamino, arylamino, diarylamino, alkylarylamino, ou $R_4$ ou $R_5$ représente un fragment répondant à la formule :

$$-(OCH_2CH_2)_qOCH_3 \text{ ou } -(OCH_2CH(CH_3))_qOCH_3,$$

dans laquelle q est un nombre entier positif allant de 6 à 12, ou un groupe alkyle substitué par ledit fragment, à condition que le nombre total d'atomes de carbone aliphatiques compris dans $R_5$ soit supérieur à 14 et avec la condition supplémentaire que $R_5$ comprenne au moins un fragment aliphatique comportant au moins 4 atomes de carbone ; et

- $R_6$ représente un atome d'hydrogène, un groupe alkyle, aryle, alkylaryle, aryloxy, arylalcoxy, alkylsulfinyle, alkylthio, alkylsulfonyle ou alcoxy.

**11.** Particule selon la revendication 10, dans laquelle ledit soluté dopant, au nombre d'au moins un, se trouvant au niveau ou proche de la surface de la particule est dérivé desdits dopants acides répondant à la formule :

$$R_4(PO_2(R_6)M)_g(PO_3M_2)_f(SO_3M)_c(PO_2M_2)_t(SO_2M)_h(PO(R_6)M)_i$$

ou

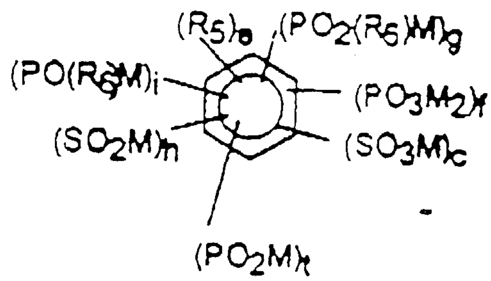

dans lesquelles :

- c, t, f, g, h et i sont identiques ou différents à chaque occurence et valent 0, 1, 2 ou 3 à condition qu'au moins l'un des c, t, f ou g, h, i ou h soit différent de 0 ; e vaut 1 ou 2 ;
- $R_4$ représente un groupe alkyle substitué ou non, dans lequel les substituants admissibles sont choisis parmi les groupes alkyle, alcoxy, un atome d'halogène, les groupes phényle, phénoxy, phényle ou phénoxy substitué par un ou plusieurs groupes alkyle, alcoxy, sulfophénoxy, halogénoalkyle, perhalogénoalkyle, alkylthio ou alkylthioalkyle à condition que le nombre total d'atomes de carbone aliphatiques compris dans $R_4$ soit supérieur à 12 atomes de carbone et avec la condition supplémentaire que $R_4$ comprenne au moins un fragment aliphatique qui comporte au moins 5 atomes de carbone aliphatiques ;
- les groupes $R_5$ sont identiques ou différents à chaque occurence et représentent les groupes alcoxyalkyle, alkyle, alcoxy ou alcoxyalkyle, alkyle ou alcoxy substitué par un ou plusieurs atomes d'halogène, ou les groupes phényle ou phénoxy substitués par un ou plusieurs groupes alkyle, alcoxy, alcoxyalkyle, ou les groupes alkyle, alcoxy ou alcoxyalkyle substitués par un ou plusieurs atomes d'halogène, substituants alkylsulfinyle, alkylsulfonyle, alkylsulfinyl-alkyle, alkylsulfonylalkyle, alkylthio ou alkylthioalkyle, ou n'importe quels substituants $R_5$, au nombre de deux, peuvent former ensemble une chaîne alkylène ou alcénylène, substituée ou non, complétant un système cyclique aromatique ou alicyclique dans lequel les substituants admissibles sont tels que décrits ci-dessus, $R_5$ représente un fragment répondant à la formule :

$$-(OCH_2CH_2)_qOCH_3 \text{ ou } -(OCH_2CH(CH_3))_qOCH_3,$$

dans laquelle q est un nombre entier positif allant de 6 à 12, à condition que le nombre total d'atomes de carbone aliphatiques compris dans $R_5$ soit supérieur à 13 et avec la condition supplémentaire que $R_5$ comprenne au moins un fragment aliphatique comportant au moins 5 atomes de carbone ;

- $R_6$ représente un atome d'hydrogène, un groupe alkyle, alcoxy ou un groupe phénoxy, phényle ou phénylalkyle substitué ou non dans lequel les substituants admissibles sont les groupes alkyle-alcoxy ou une combinaison de ces derniers ; et

  M représente $H^+$ ou un autre cation métallique ou non, à condition qu'au moins l'un des M représente $H^+$ ou un fragment que l'on peut transformer par voie thermique ou chimique en un proton dans des conditions d'utilisation ou de procédé.

**12.** Particule selon la revendication 10, dans laquelle ledit soluté dopant, au nombre d'au moins un, prédominant au niveau ou à proximité de la surface de ladite particule, est dérivé des dopants acides répondant à la formule :

$$R_4(PO_2M)_t(SO_3M)_c(PO_3)_f$$

ou

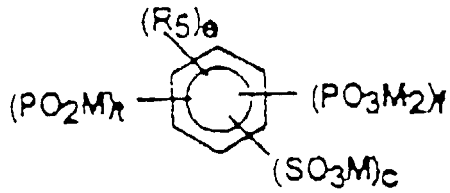

dans lesquelles :

- c, f et t sont identiques ou différents et valent 0, 1 ou 2, à condition qu'au moins l'un des c, f et t ne soit pas égal à 0 ;
- e vaut 1 ou 2 ;
- R représente un groupe alkyle ou phénylalkyle substitué ou non par un ou plusieurs substituants phénoxy, sulfophénoxy ou alcoxy, dans lequel les fragments aliphatiques comportent plus de 12 atomes de carbone ;
- les groupes $R_5$ sont identiques ou différents à chaque occurence et représentent un groupe alcoxyalkyle, alkyle, alcoxy, phénylalcoxy ou phénylalkyle ou sulfophénoxy, phénoxy ou phényle substitué par un ou plusieurs substituants alkyle ou alcoxy, ou deux ou plus de deux groupes $R_5$ peuvent former ensemble une chaîne alcénylène divalente complétant un noyau naphtalénique substitué par un ou plusieurs groupes alkyle ou alcoxy, à condition que les groupes $R_5$ comportent plus de 12 atomes de carbone aliphatiques ; et
- M représente $H^+$ ou un autre cation métallique ou non, à condition qu'au moins l'un des M représente $H^+$ ou un fragment que l'on peut transformer par voie thermique ou chimique en un proton dans des conditions d'utilisation ou de procédé.

**13.** Particule selon la revendication 11, dans laquelle ledit soluté dopant, au nombre d'au moins un, prédominant au niveau ou à proximité de la surface de la particule, est dérivé de dopants acides répondant à la formule :

$$R_4(SO_3M)_c$$

ou

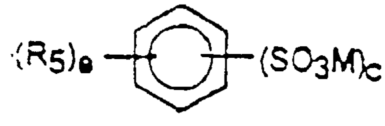

dans lesquelles :

- c vaut 1, 2 ou 3 ;
- e vaut 0, 1 ou 2 ;
- $R_4$ représente un groupe alkyle comportant plus de 12 atomes de carbone ou ledit groupe alkyle substitué par un ou plusieurs atomes d'halogène ;
- $R_5$ représente un groupe alkyle, alcoxy, alcoxyalkyle ou phényle, phénoxy ou sulfophénoxy substitué par un ou plusieurs substituants alkyle ou alcoxy, ou deux ou plus de deux groupes $R_5$ peuvent former ensemble une chaîne alcénylène divalente complétant un noyau naphtalénique substitué par un ou plusieurs groupes alkyle ou alcoxy, à condition que le nombre total d'atomes de carbone aliphatiques compris dans $R_5$ soit supérieur à 14 et avec la condition supplémentaire que $R_5$ comprenne au moins un fragment aliphatique comportant au moins 7 atomes de carbone ; et
- M représente $H^+$ ou un autre cation métallique ou non, ou un fragment que l'on peut transformer par voie thermique ou chimique en un proton dans des conditions de procédé.

**14.** Particule selon la revendication 13, dans laquelle $R_5$ représente un groupe alkyle ou phénoxy substitué par un ou plusieurs groupes alkyle ou acide sulfonique, ou n'importe quels groupes $R_5$ au nombre de deux, forment ensemble une chaîne alcénylène complétant un noyau naphtalénique substitué par un ou plusieurs groupes alkyle.

**15.** Particule selon la revendication 12, dans laquelle ledit premier dopant prédominant au niveau ou à proximité de la surface de ladite particule, est l'acide dinonylnaphtalène-sulfonique, l'acide didécyldiphényléther-disulfonique, l'acide hexadécyldiphényléther-disulfonique, ou l'acide alcane-sulfonique comportant plus de 12 atomes de carbone aliphatiques.

FIGURE 1

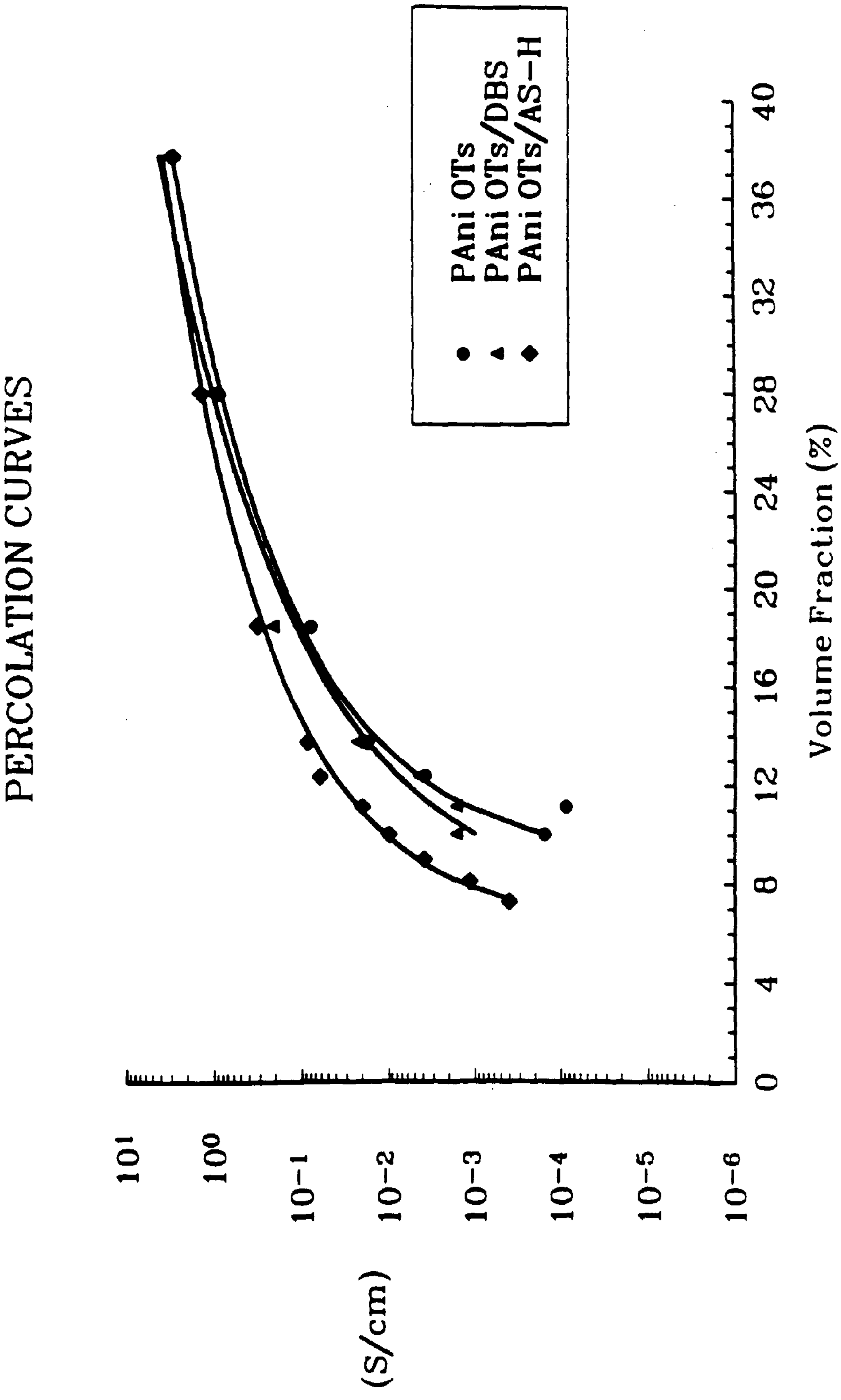
PERCOLATION CURVES
PAni OTs
PAni OTs/DBS
PAni OTs/AS−H
(S/cm)
10¹
10⁰
10−1
10−2
10−3
10−4
10−5
10−6
0
4
8
12
16
20
24
28
32
36
40
Volume Fraction (%)